# EUROPÄISCHE PATENTANMELDUNG

(11) **EP 4 656 897 A1**
(43) Veröffentlichungstag der Anmeldung: **03.12.2025**
(21) Anmeldenummer: 24178300.0
(22) Anmeldetag: 27.05.2024
(51) Int. Cl.: F16D 55/226, F16D 65/18

(54) **SATTELABDECKUNGSANORDNUNG FÜR EINEN BREMSSATTEL, BREMSSATTELBAUGRUPPE FÜR EINE KRAFTFAHRZEUG-SCHEIBENBREMSE SOWIE NUTZFAHRZEUG-SCHEIBENBREMSE**

(71) Anmelder: ZF CV Systems Europe BV, 1170 Brüssel (BE)
(72) Erfinder: STRZALA, Wieslaw, 46-220 Byczyna (PL)
(74) Vertreter: Schäferjohann, Volker

(57) **Zusammenfassung**

Die Erfindung betrifft eine Sattelabdeckungsanordnung (50',50", 50‴) für eine Bremssattelbaugruppe (1) für eine Nutzfahrzeug-Scheibenbremse (100), wenigstens umfassend eine Sattelabdeckung (5',5ʺ, 5‴, 5ʺʺ) oder wenigstens umfassend die Sattelabdeckung (5',5ʺ, 5‴, 5ʺʺ) und ein oder mehrere Anbauteile wie eine fahrzeugabseitige Stützplatte (9), insbesondere zudem eine dieser gegenüberliegende bremsscheibenseitige Gehäusewand (17) und/oder fahrzeugseitige Gehäusewand (7) eines Sattelgehäuses (103), welche Sattelabdeckung (5',5ʺ, 5‴, 5ʺʺ) ausgebildet ist, ein Sattelgehäuse (103) oberseitig abzudecken, wobei
- eine Bremsscheibe entlang einer Rotationsachse (R) von einer Zuspannseite (I) bis hin zu einer Reaktionsseite (O) mit einer Rahmenkontur (KR) der Sattelabdeckung (5',5ʺ, 5‴, 5ʺʺ) übergriffen werden kann, und wobei die Sattelabdeckung (5',5ʺ, 5‴, 5ʺʺ) eine der Reaktionsseite (O) zugeordnete fahrzeugabseitige Au-ßenseite (A) aufweist, und
- mit einer in Richtung einer Drehrichtung (D) der Bremsscheibe Bogenkontur (KB) gebildet ist, die sich zwischen in Drehrichtung gegenüberliegenden Rändern (R1, R2) der Sattelabdeckung erstreckt.

Erfindungsgemäß ist vorgesehen, dass die Sattelabdeckung (5',5ʺ, 5‴, 5ʺʺ) als ein die Rahmenkontur (KR) und die Bogenkontur (KB) eines Rahmenabschnitts (52) ausbildendes einstückiges metallisches Formteil gebildet ist, insbesondere Formblechteil gebildet ist, insbesondere teilweise oder vollständig aus Blech gebildet ist, wobei
- das einstückige Formteil an der Bogenkontur (KB), insbesondere an wenigstens einem der Ränder (R1, R2), eine formabweichende Auskragung (E1) aufweist, und/oder
- die fahrzeugabseitige Stützplatte (9) eine formabweichende Auskragung aufweist und/oder einen in den Innenraum (24) ragenden erhabenen Teil auf weist.

## Beschreibung

Die vorliegende Erfindung betrifft eine Sattelabdeckungsanordnung gemäß dem Oberbegriff des Anspruchs 1 für einen Bremssattel für eine Kraftfahrzeug-Scheibenbremse, wenigstens umfassend eine Sattelabdeckung.

Die vorliegende Erfindung betrifft auch eine Bremssattelbaugruppe --bzw. im folgenden auch Bremssattel-- für eine Kraftfahrzeug-Scheibenbremse, insbesondere für eine Nutzfahrzeug-Scheibenbremse mit einer um eine Rotationsachse herum bewegten Bremsscheibe, insbesondere für eine Gleitsattelbremse, mit einem Sattelgehäuse mit einem Hohlraum zur Aufnahme eines Zuspannmechanismus, und mit einer Sattelabdeckung, welche einen Bremsträger oberseitig abdeckt und die Bremsscheibe von einer Zuspannseite der Bremsscheibe bis hin zu einer Reaktionsseite der Bremsscheibe übergreift.

Vorzugsweise dient der Hohlraum zur Aufnahme eines Zuspannmechanismus, der einen um eine Hebelachse schwenkbare Bremshebel aufweist, wobei das Sattelgehäuse eine fahrzeugseitige Gehäusewand aus einem einteiligen gebogenen Blech aufweist, an deren Innenseite wenigstens ein Stützelement zur Abstützung des Bremshebels vorgesehen ist. Vorzugsweise ist das Sattelgehäuse ausgebildet für einen Niederhaltebügel, der an der Sattelabdeckung reaktionsseitig an einer Halterung reversibel lösbar befestigbar ist, um die Bremsscheibe von der Zuspannseite bis zur Reaktionsseite zu überspannen. Vorzugsweise ist die Sattelabdeckung teilweise oder vollständig aus Blech ausgebildet.

Aus WO2016/135316 A1 ist im Prinzip ein solcher Bremssattel für eine Scheibenbremse bekannt, bei dem eine Sattelabdeckung und ein Sattelgehäuse aus Segmenten zusammengesetzt ist, wobei jedes der Segmente jeweils aus Blech gefertigt ist.

Sattelgehäuse und Sattelabdeckungen für Kraftfahrzeug-Scheibenbremsen sind aber bislang allgemein für Bremssättel verbreitet, in denen das Sattelgehäuse bzw. Sattelabdeckungen und/oder der Bremssattel als Gussteile ausgebildet sind. Diejenigen Funktionselemente des Bremssattels und des Sattelgehäuses und/oder der Sattelabdeckung im speziellen, die eine sehr präzise Ausrichtung und Oberflächenbearbeitung erfordern, weil sie funktionskritische Komponenten beweglich lagern oder halten, werden bei diesen Gussteilen mechanisch nachbearbeitet, um die erforderlichen Funktionen erfüllen zu können. Das Herstellen dieser Elemente aus Metallguss hat grundsätzlich seine Berechtigung, weil Gussteile sich gut in hoher Stückzahl herstellen lassen und mechanisch herausragende Stabilität besitzen. Als Nachteil sind im Allgemeinen das hohe Eigengewicht der Gussteile. Die Wirtschaftlichkeit der Verwendung von gussteilen ist abhängig von den verwendeten Gussformen mitunter begrenzt, insbesondere bei der Verwendung verlorener Gussformen. Es gibt daher grundsätzlich das Bestreben, insbesondere für das Sattelgehäuse, aber auch für den Bremssattel, Alternativen zu finden, die eine wirtschaftliche Herstellung erlauben und eine Reduzierung des Eigengewichts der Kraftfahrzeug-Scheibenbremse ermöglichen, ohne die Stabilität der Bremsen zu kompromittieren und insbesondere für eine Gleitsattelbremse die Sicherheit zu verbessern.

Aus der eingangs genannten WO2016/135316 A1 ist ein Bremssattel für eine Scheibenbremse bekannt, bei dem das Sattelgehäuse bzw. Sattelabdeckung aus einem äußeren Segment, einem zu dem äußeren Segment im Wesentlichen parallel verlaufenden inneren Segment, und zwei sich zwischen den äußeren und inneren Segmenten erstreckenden Boden mit entsprechenden Abdeckungselementen gebildet wird, die jeweils aus Blech gefertigt sind. Dort wird vorgeschlagen, zumindest zwei dieser Segmente durch ein einheitliches Blechelement auszubilden. Zur Befestigung wenigstens eines Stützelements wird vorgeschlagen, dieses mit der fahrzeugseitigen Gehäusewand in Anlage zu bringen und sodann von außen durch die Gehäusewand hindurch miteinander zu verschweißen. Hieraus soll sich der Vorteil ergeben, dass die fahrzeugseitige Gehäusewand von außen für einen Schweißroboter gut zugänglich ist.

Die Zuverlässigkeit einer solchen Fügeverbindung ist indes fraglich. Wünschenswert ist es den Betrieb und/oder die Herstellung des Bremssattels sicherer und dennoch vereinfacht zu gestalten. Wünschenswert ist es insbesondere im Hinblick auf eine Sattelabdeckungsanordnung --d.h. eine Sattelabdeckung und deren Anbauteile, wie eine fahrzeugseitige Gehäusewand oder eine dem gegenüberliegende fahrzeugabseitige Stützplatteden Betrieb für den Bremsträger sicherer und/oder die Herstellung der Sattelabdeckung und deren Anbauteile dennoch vereinfacht zu gestalten. Vorzugsweise sollten die Sattelabdeckung, optional deren Anbauteile, derart gestaltet werden, dass der Betrieb für den Bremsträger sicherer gestaltet ist und die Herstellung der Sattelabdeckung vereinfacht ist. Insbesondere ist dies gewünscht für eine Gleitsattelbremse, wobei die Sicherheit vor allem zu verbessern ist in Bezug auf einen in axialer Richtung zunächst frei beweglichen Bremssattel.

An dieser Stelle setzt die Erfindung an, deren Aufgabe es ist, eine, und einen Bremssattel, insbesondere eine Sattelabdeckungsanordnung bzw. Sattelabdeckung, der eingangs bezeichneten Art, vorzugsweise für eine Gleitsattelbremse, dahingehend weiterzuentwickeln, dass die vorstehend beschriebenen Nachteile möglichst weitgehend überwunden werden.

Insbesondere lag der Erfindung die Aufgabe zugrunde, eine solche Sattelabdeckungsanordnung, insbesondere eine Sattelabdeckung, anzugeben, welche eine Reduzierung des Eigengewichts der Kraftfahrzeug-Scheibenbremse ermöglicht, ohne die Stabilität der Bremsen zu kompromittieren. Insbesondere sollte für eine Gleitsattelbremse die Sicherheit verbessert werden und diese sollte vorzugsweise zudem vereinfacht herstellbar sein.

Die Aufgabe betreffend die Sattelabdeckungsanordnung, insbesondere eine Sattelabdeckung wird in einem ersten Aspekt der Erfindung durch eine Sattelabdeckungsanordnung nach Anspruch 1 gelöst.

Die Erfindung löst die ihr zugrundeliegende Aufgabe vor allem mittels einer Sattelabdeckungsanordnung, insbesondere eine Sattelabdeckung, der eingangs bezeichneten Art, die erfindungsgemäß mit den Merkmalen des kennzeichnenden Teils von Anspruch 1 ausgebildet ist.

Die Erfindung geht damit aus von einer Sattelabdeckungsanordnung für eine Bremssattelbaugruppe für eine Nutzfahrzeug-Scheibenbremse, wenigstens umfassend eine Sattelabdeckung oder wenigstens umfassend die Sattelabdeckung und ein oder mehrere Anbauteile wie eine fahrzeugabseitige Stützplatte, insbesondere zudem eine dieser gegenüberliegenden bremsscheibenseitige Gehäusewand und/oder fahrzeugseitige Gehäusewand eines Sattelgehäuses, welche Sattelabdeckung ausgebildet ist, ein Sattelgehäuse oberseitig abzudecken, wobei
- eine Bremsscheibe entlang einer Rotationsachse von einer Zuspannseite bis hin zu einer Reaktionsseite mit einer Rahmenkontur der Sattelabdeckung übergriffen werden kann, und wobei die Sattelabdeckung eine der Reaktionsseite zugeordnete fahrzeugabseitige Außenseite aufweist, und
- mit einer in Richtung einer Drehrichtung der Bremsscheibe Bogenkontur gebildet ist, die sich zwischen in Drehrichtung gegenüberliegenden Rändern der Sattelabdeckung erstreckt.

Erfindungsgemäß ist vorgesehen,
die Sattelabdeckung als ein die Rahmenkontur und die Bogenkontur eines Rahmenabschnitts ausbildendes einstückiges metallisches Formteil gebildet ist, insbesondere Formblechteil gebildet ist, insbesondere teilweise oder vollständig aus Blech gebildet ist, wobei
- das einstückige Formteil an der Bogenkontur, insbesondere an wenigstens einem der Ränder, eine formabweichende Auskragung aufweist, und/oder
- die fahrzeugabseitige Stützplatte eine formabweichende Auskragung aufweist und/oder einen in den Innenraum ragenden erhabenen Teil aufweist.

Die Sattelabdeckungsanordnung umfasst insbesondere die Sattelabdeckung und ein oder mehrere Anbauteile wie eine fahrzeugseitige Gehäusewand oder eine dem gegenüberliegende fahrzeugabseitige Stützplatte. Die Sattelabdeckung ist insbesondere teilweise oder vollständig aus Blech ausgebildet. Das einstückige Formteil weist die formabweichende Einwölbung, insbesondere an der Außenseite der rahmenartigen Kontur auf. Das einstückige Formteil weist die formabweichende Auskragung, insbesondere an wenigstens einem der Ränder der bogenartigen Kontur auf.

Es ist mit dem Konzept der Erfindung eine vorteilhafte Konstruktion einer Sattelabdeckungsanordnung für einen Bremssattel für eine Kraftfahrzeug-Scheibenbremse angegeben, wenigstens umfassend eine Sattelabdeckung, bei der die Anbringung von Sicherheitselementen und Herstellungselementen in der genannten Weise am einstückigen Formteil --insbesondere teilweise oder vollständig aus einem gebogenen und geformten Blech ausgebildet-- vorgesehen ist und die auf das Sattelgehäuse aufgesetzt werden kann. Der Betrieb des Bremssattels ist erheblich sicherer und die Herstellung der Sattelabdeckung ist erheblich vereinfacht.

Zur Lösung der Aufgabe führt die Erfindung in einem zweiten Aspekt auch auf eine Bremssattelbaugruppe nach Anspruch 16.

Die Erfindung führt auch auf eine Bremssattelbaugruppe für eine Kraftfahrzeug-Scheibenbremse, insbesondere für eine Nutzfahrzeug-Scheibenbremse mit einer um eine Rotationsachse herum bewegten Bremsscheibe, insbesondere für eine Gleitsattelbremse, mit einem Bremsträger und mit einer Sattelabdeckungsanordnung nach dem Konzept der Erfindung und mit einem Sattelgehäuse mit einem Hohlraum zur Aufnahme eines Zuspannmechanismus,
insbesondere umfassend die Sattelabdeckung und ein oder mehrere Anbauteile wie eine fahrzeugabseitige Stützplatte, insbesondere zudem umfassend eine die ser gegenüberliegende bremsscheibenseitige Gehäusewand und fahrzeugseitige Gehäusewand des Sattelgehäuses, welche Sattelabdeckung ausgebildet ist, den Bremsträger oberseitig abzudecken und die Bremsscheibe von einer Zuspann seite bis hin zu einer Reaktionsseite übergreift und wobei die Sattelabdeckung eine der Reaktionsseite zugeordnete fahrzeugabseitige Außenseite aufweist.

Insbesondere umfasst der Bremsträger außenseitig einen Anschlag, insbesondere eine Ausstülpung. Insbesondere trägt der Bremsträger außenseitig ein Horn oder eine Noppe. Der außenseitige Anschlag am Bremsträger ist ausgebildet, mit der formabweichenden Einwölbung oder der formabweichenden Auskragung der Sattelabdeckung zur Begrenzung einer Bewegung des Bremssattels, insbesondere eines Gleitbremssattels, zusammenzuwirken.

Insbesondere kann der Zuspannmechanismus einen um eine Hebelachse schwenkbaren Bremshebel aufweisen, wobei das Sattelgehäuse eine fahrzeugseitige Gehäusewand aus einem einteiligen gebogenen Blech aufweist, an deren Innenseite wenigstens ein Stützelement zur Abstützung des Bremshebels vorgesehen ist.

Zur Lösung der Aufgabe, führt die Erfindung in einem dritten Aspekt auch auf eine Nutzfahrzeug-Scheibenbremse nach Anspruch 19. Die Erfindung führt damit auch auf eine Scheibenbremse und/oder ein Kraftfahrzeug mit einer Bremssattelbaugruppe, d.h. mit einem Bremssattel, der vorgenannten Art gemäß dem Konzept der Erfindung.

Weiterbildungen der Erfindung sind in den abhängigen Ansprüchen angegeben, welche das Konzept der Erfindung in Bezug auf vorteilhafte Merkmale im Rahmen der Aufgabenstellung und im Hinblick auf weitere Vorteile weiterbilden.

Im Rahmen einer besonders bevorzugten Weiterbildung ist vorgesehen, dass das einstückige Formteil an der Rahmenkontur, insbesondere an der Außenseite, eine formabweichende Ausstülpung aufweist, oder das einstückige Formteil an der Rahmenkontur, insbesondere an der Außenseite, eine formabweichende Einwölbung aufweist.

Im Rahmen einer besonders bevorzugten Weiterbildung ist vorgesehen, dass diese weiter ein Sattelgehäuse aufweist, mit einer bremsscheibenseitigen Gehäusewand und einer fahrzeugseitigen Gehäusewand des Sattelgehäuses.

Im Rahmen einer besonders bevorzugten Weiterbildung ist vorgesehen, dass die Sattelabdeckung ausgebildet ist, einen Hohlraum des Sattelgehäuses zur Aufnahme eines Zuspannmechanismus abzudecken und die Sattelabdeckung ausgebildet ist, einen Innenraum zur Aufnahme eines Bremsträgers zu übergreifen.

Ein Domabschnitt ist in besonders bevorzugter Weise zur Vergrößerung des Hohlraums vorgesehen, um die Schwenkbewegung eines Hebels des Zuspannmechanismus (nicht gezeigt) zu ermöglichen. Es hat sich damit insbesondere als vorteilhaft erwiesen, dass die Sattelabdeckung als ein einen Domabschnitt und den Rahmenabschnitt mit der Rahmenkontur und der Bogenkontur ausbildendes einstückiges Formteil gebildet ist, wobei der Domabschnitt nach außen gewölbt ist zur Abdeckung des Hohlraums, insbesondere für einen Zuspannmechanismus, und der Rahmenabschnitt ein Fenster zu einem Innenraum, insbesondere für Bremsbeläge, berandet.

Im Rahmen einer besonders bevorzugten Weiterbildung ist vorgesehen, dass die Sattelabdeckungsanordnung die Sattelabdeckung und eine fahrzeugabseitige Stützplatte, umfasst, wobei die fahrzeugabseitige Stützplatte selbst, eine formabweichende Einwölbung und/oder die formabweichende Auskragung aufweist.

Im Rahmen einer besonders bevorzugten Weiterbildung ist vorgesehen, dass
- wenigstens einer der Ränder der bogenartigen Kontur oder die bogenartige Kontur selbst an seiner der Zuspannseite zugeordneten Innenseite der Sattelabdeckung die formabweichende Auskragung als wenigstens ein nach untenseitig vorstehendes Fortsatzstück trägt, das ausgebildet ist, eine Bewegung des Bremssattels, insbesondere Gleitbremssattels, zur Zuspannseite (also zur Fahrzeuginnenseite, nach innen hin) zu begrenzen.

Im Rahmen einer besonders bevorzugten Weiterbildung ist vorgesehen, dass
- wenigstens die Außenseite der rahmenartigen Kontur oder die rahmenartige Kontur selbst die formabweichende Einwölbung als wenigstens eine nach innenseitig vorstehende Einprägung oder Eindellung trägt, die ausgebildet ist, eine Bewegung des Bremssattels, insbesondere Gleitbremssattels, zur Reaktionsseite (zur Fahrzeugaußenseite, nach außen hin) zu begrenzen.

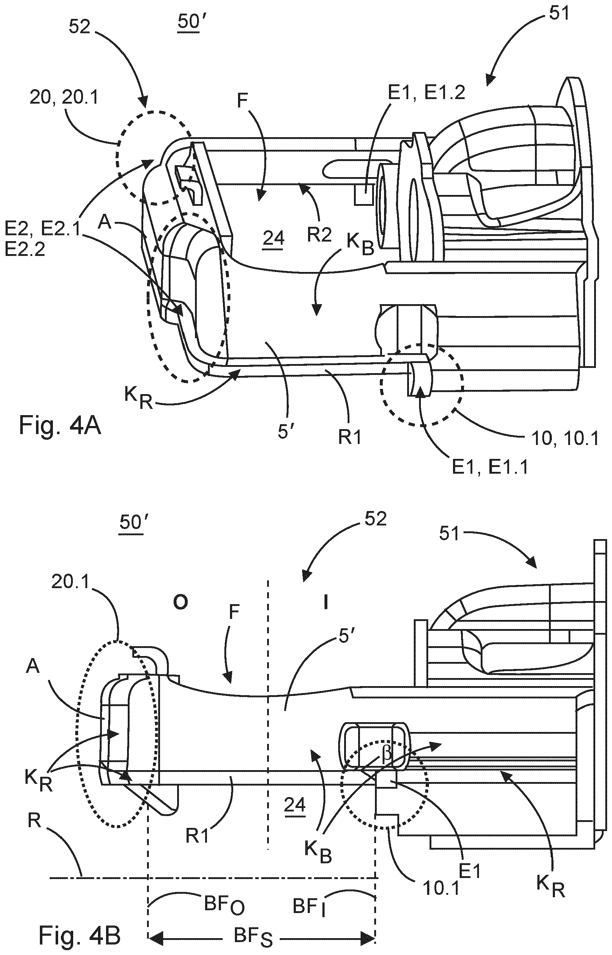

Bevorzugte Ausführungsformen sind dazu insbesondere im Zusammenhang mit FIG. 4 bis FIG. 7 erläutert und beschrieben. So hat es sich --wie in den Ausführungsformen im Einzelnen beispielhaft beschrieben ist-- im Rahmen einer besonders bevorzugten Weiterbildung als vorteilhaft erwiesen, dass die formabweichende Einwölbung als eine flächige Vertiefung oder Versatz in der Außenseite oder Stützplatte gebildet ist. So hat es sich --wie in den Ausführungsformen im Einzelnen beispielhaft beschrieben ist-- im Rahmen einer besonders bevorzugten Weiterbildung als vorteilhaft erwiesen, dass die formabweichende Auskragung als Anformung an wenigstens einem der Ränder oder als integraler Bestandteil wenigstens eines der Ränder gebildet ist.

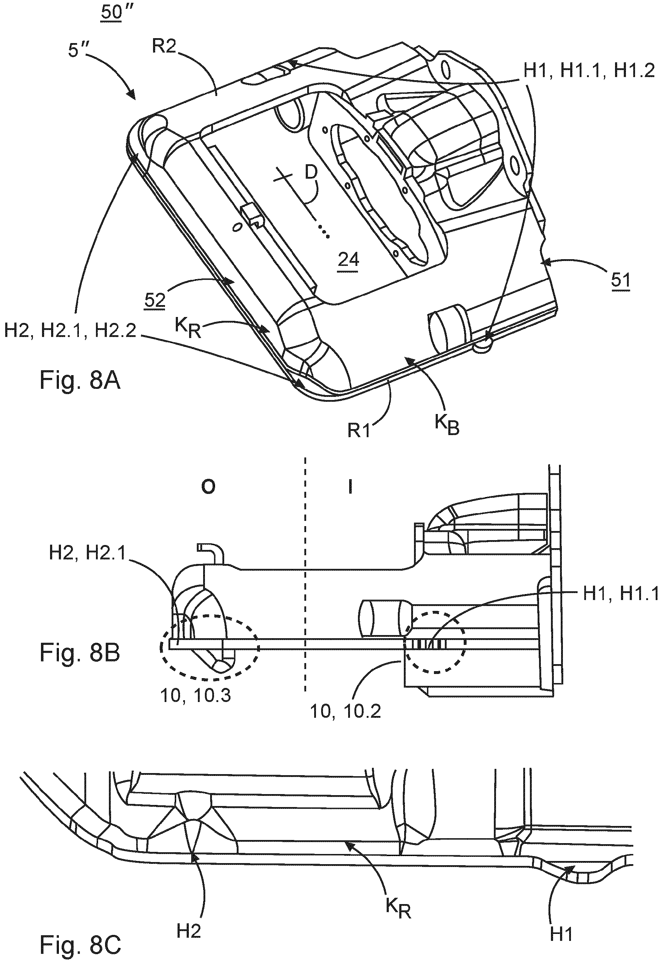

Im Rahmen einer besonders bevorzugten Weiterbildung ist vorgesehen, dass die Sattelabdeckung 5 im Bereich einer äußeren Umrandung, insbesondere der Ränder des Domabschnitts 51 und/oder der Rahmenabschnitts, die formabweichende Auskragung als einen oder mehrere Flachabschnitte aufweist, wobei
ein Flachabschnitt sich vorbestimmt berandet von der Form des einstückigen Formteils der Sattelabdeckung absetzt, derart dass der Flachabschnitt eine Angriffsfläche für eine Klemm- oder Haltewerkzeug bildet. Eine bevorzugte Ausführungsform ist dazu insbesondere im Zusammenhang mit FIG. 8 erläutert und beschrieben.

So hat es sich --wie in der Ausführungsform im Einzelnen beispielhaft beschrieben istim Rahmen einer besonders bevorzugten Weiterbildung als vorteilhaft erwiesen, dass der Flachabschnitt einem Halbzeug des Formteils der Sattelabdeckung auf-, an- oder eingeformt ist, insbesondere auf-, an- oder eingeprägt bzw. -gedrückt ist.

So hat es sich --wie in der Ausführungsform im Einzelnen beispielhaft beschrieben istim Rahmen einer besonders bevorzugten Weiterbildung als vorteilhaft erwiesen, dass der Flachabschnitt als eine zu einer gewölbten Fläche abgeflacht und vorbestimmt berandete Fläche gebildet ist, und
- sich über einen Zargenbereich der äußeren Umrandung hinaus erstreckt, oder
- eine gewölbte Ecke des Zargenbereichs der äußeren Umrandung einflacht.

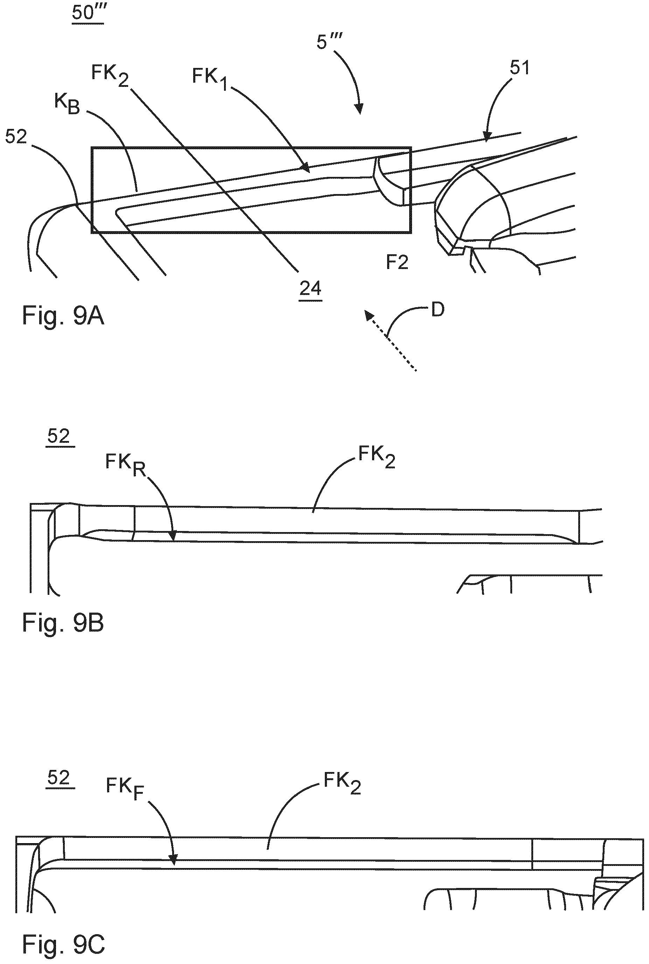

Im Rahmen einer besonders bevorzugten Weiterbildung ist vorgesehen, dass der Rahmenabschnitt, insbesondere zu einem Fenster hin, eine oder mehrere Kantenabschnitte des Rahmenabschnitts aufweist, die, insbesondere wenigstens ein fensterseitiger Unterkantenabschnitt einer Fensterkante des Rahmenabschnitts zum Innenraum hin, in vorbestimmter Weise abgeflacht sind. Eine bevorzugte Ausführungsform ist dazu insbesondere im Zusammenhang mit FIG. 9 erläutert und beschrieben.

So hat es sich --wie in der Ausführungsform im Einzelnen beispielhaft beschrieben istim Rahmen einer besonders bevorzugten Weiterbildung als vorteilhaft erwiesen, dass
- eine oder mehrere Kantenabschnitte des Rahmenabschnitts zum Fenster mit einer vorbestimmt ausgebildeten Fase abgekantet sind, insbesondere die Fase in einem vorbestimmten Winkel zur Fensterfläche und/oder mit einer vorbestimmten Fasenbreite ausgebildet ist, und/oder
- eine oder mehrere Kantenabschnitte des Rahmenabschnitts zum Fenster mit einem vorbestimmt ausgebildeten Radius gerundet abgeflacht sind, insbesondere der Radius einen vorbestimmten Radiuswert hat.

So hat es sich --wie in der Ausführungsform im Einzelnen beispielhaft beschrieben istim Rahmen einer besonders bevorzugten Weiterbildung als vorteilhaft erwiesen, dass die eine oder mehrere Kantenabschnitte des Rahmenabschnitts zum Fenster eine quer zur Drehrichtung einer Bremsscheibe ausgerichtete Kante des Rahmenabschnitts zum Fenster bilden, insbesondere nicht seitens der Stützplatte und/oder nicht seitens der fahrzeugseitigen Gehäusewand laufende Kante des Rahmenabschnitts zum Fenster bilden.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:

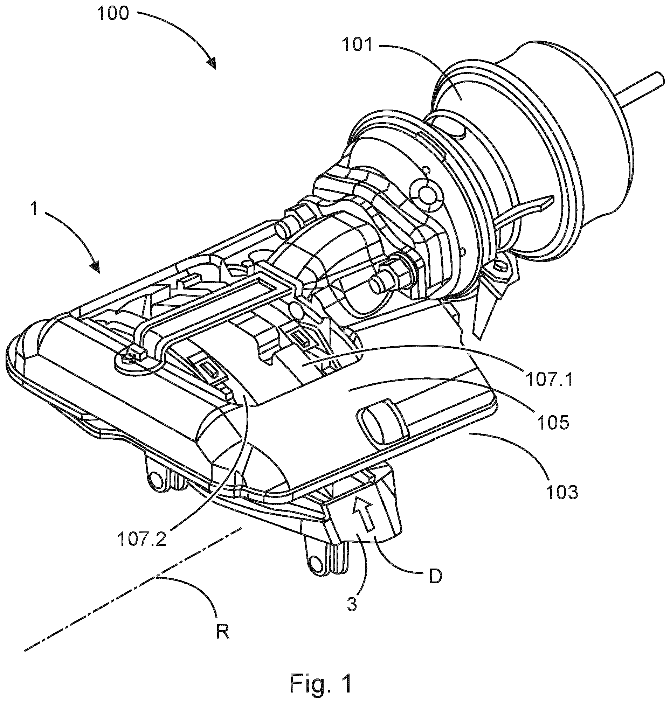

- FIG. 1: eine Nutzfahrzeug-Scheibenbremse in einer schematischen räumlichen Ansicht gemäß einem bevorzugten Ausführungsbeispiel;

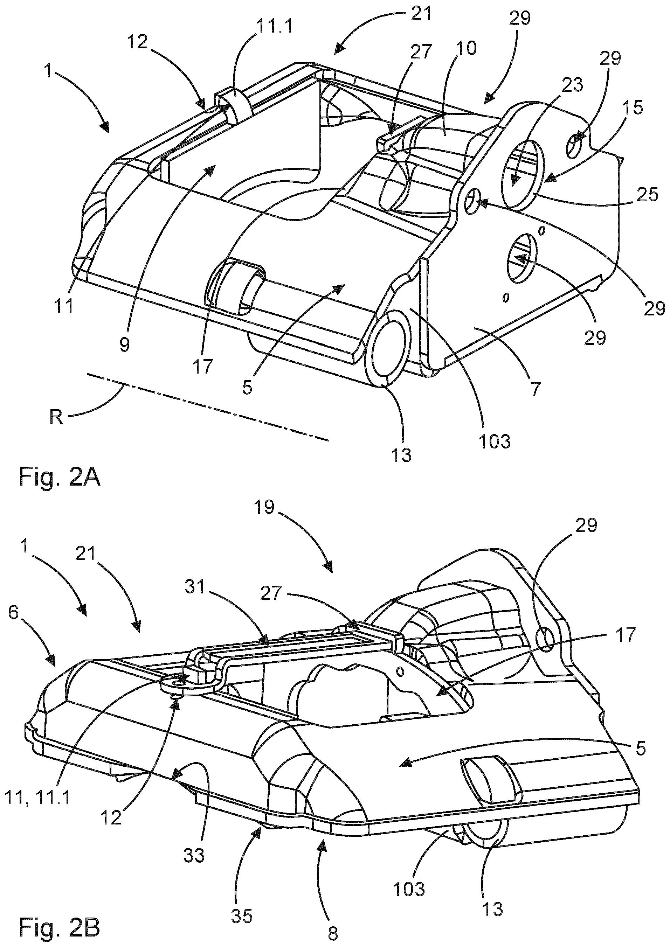

- FIG. 2A, FIG. 2B: eine erste und zweite räumliche schematische Ansicht eines Bremssattels gemäß dem grundsätzlichen Konzept der Erfindung mit einer teilweise oder vollständig aus Blech ausgebildeten Sattelabdeckung gemäß einem Vergleichsbeispiel;

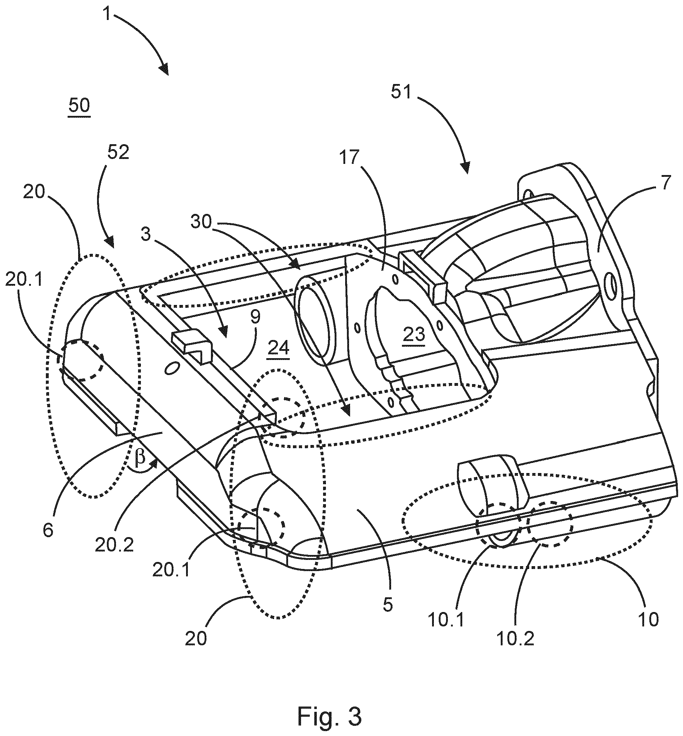

- FIG. 3: ein Detail der teilweise oder vollständig aus Blech ausgebildeten Sattelabdeckung gemäß dem Vergleichsbeispiel der FIG. 2A und FIG. 2B;
- FIG. 4A, FIG.4B: eine erste bevorzugte Ausführungsform bei der das einstückige Formteil an der bogenartigen Kontur, nämlich an wenigstens einem der Ränder derselben, eine formabweichende Auskragung aufweist, wobei diese eine Bewegung des Bremssattels zur Zuspannseite (Fahrzeuginnenseite, nach innen) begrenzt - FIG. 4A zeigt die Ausführungsform in einer perspektivischen Ansicht und FIG. 4B in einer Seitenansicht;

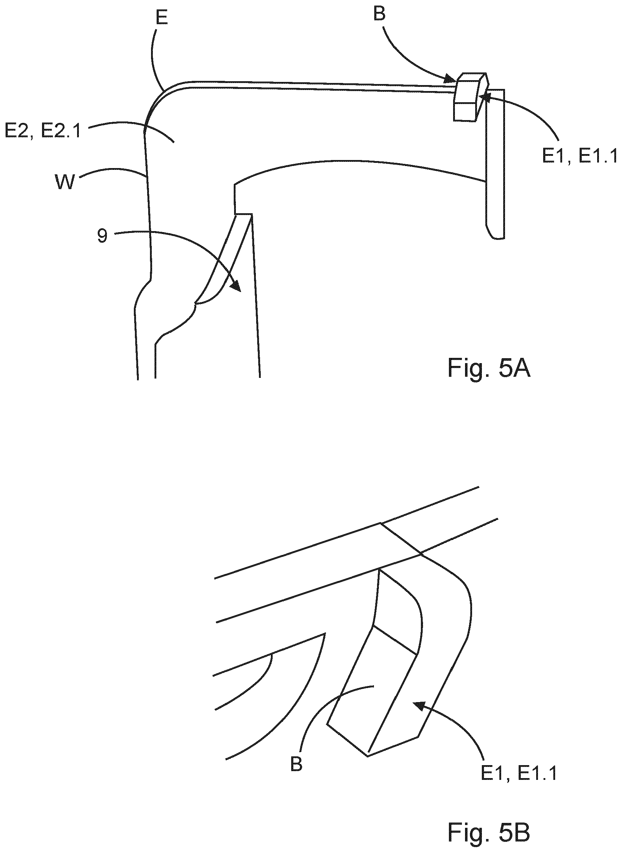

- FIG. 5A, FIG.5B: die vorgenannte erste Ausführungsform im Detail, wobei FIG. 5A eine Unteransicht der bevorzugten Sattelabdeckung mit ihrer Außenseite zeigt sowie einem Anbauteil in Form der fahrzeugabseitigen Stützplatte und FIG. 5B die formabweichende Auskragung als ein im Wesentlichen nach untenseitig vorstehendes Fortsatzstück im Detail zeigt;

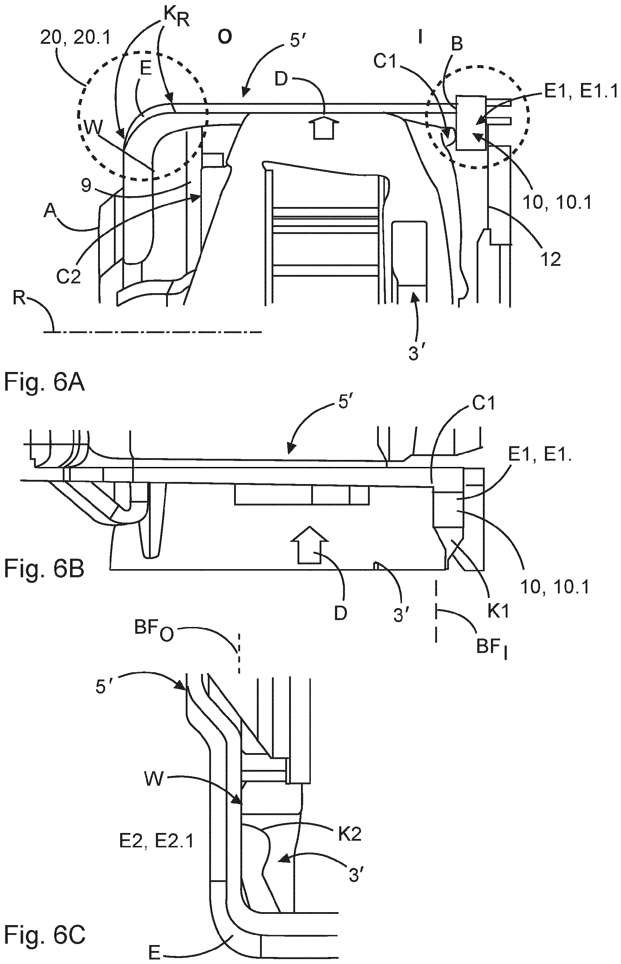

- FIG. 6A, FIG.6B, FIG. 6C: eine gemäß der ersten Ausführungsform ausgebildete, besonders bevorzugte Ausführungsform eines Bremssattels, d.h. mit der vorgenannten Sattelabdeckungsanordnung der FIG. 4A bis FIG. 5B mit einem entsprechend vorteilhaft ausgebildeten Sattelgehäuse für eine besonders bevorzugte Ausführungsform eines Bremssattels - FIG. 6A zeigt eine Unteransicht eines Sattelgehäuses zusammen mit der Sattelabdeckungsanordnung und einem Bremsträger und FIG. 6B und FIG. 6C zeigt Details derselben in einer geänderten Perspektive der Unteransicht;

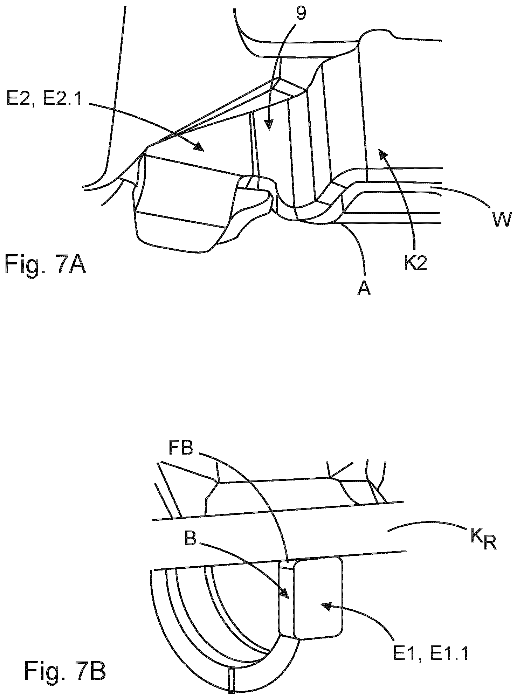

- FIG. 7A, FIG.7B: besonders bevorzugte Variationen zur ersten Ausführungsform, wobei Sicherheitselemente zur Begrenzung einer Bewegung des Bremssattels vorgesehen sind, auch bei einer fahrzeugabseitigen Stützplatte (FIG. 7A) und einem Rand eines Rahmenabschnitts der Sattelabdeckung (FIG. 7B);

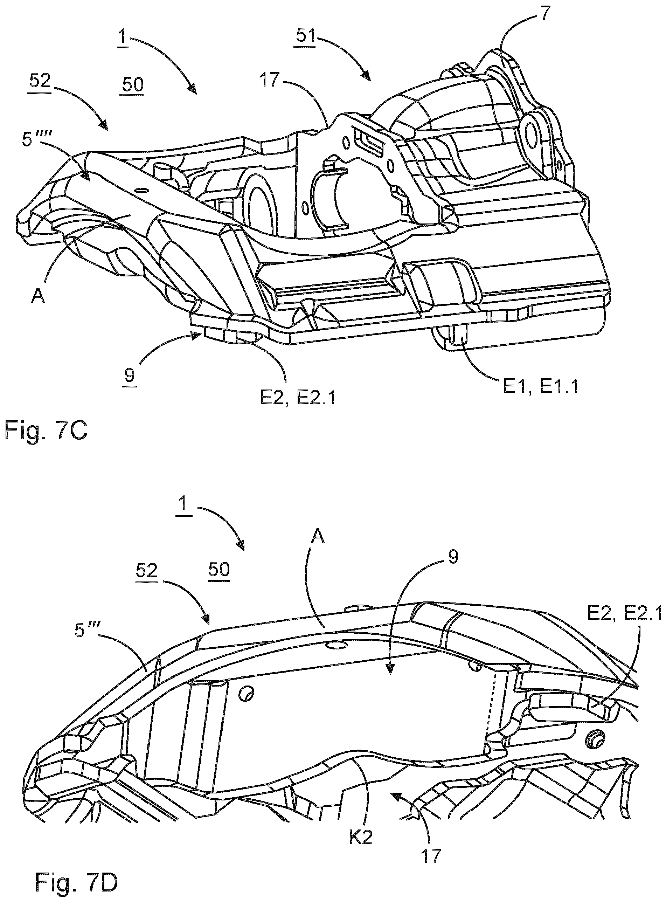

- FIG. 7C, FIG.7D: eine weitere Variation zur ersten Ausführungsform in einer Ansicht perspektivisch von oben (Fig. 7C) und einer Ansicht perspektivisch von unten (Fig. 7D), wobei ein Sicherheitselement durch eine verlängerte Trägerplatte für einen Bremsbelag realisiert wird und sich ein Anschlag auf der Trägerplatte befindet;
- FIG. 8A, FIG.8B, FIG. 8C: eine zweite Ausführungsform gemäß dem Konzept der Erfindung, bei welcher das Sattelgehäuse Herstellungselemente aufweist, die bei einer Herstellung der Sattelabdeckung die Herstellung besonders vorteilhaft unterstützen - FIG. 8A zeigt dazu eine perspektivische Ansicht; FIG. 8B eine Seitenansicht und FIG. 8C eine perspektivische Draufsicht auf das Detail des Sattelgehäuses an dessen Rahmenabschnitt;
- FIG. 9A, FIG. 9B, FIG. 9C: eine dritte Ausführungsform eines Sattelgehäuses gemäß dem Konzept der Erfindung, bei welcher zur Weiterbildung vor allem der ersten und zweiten Ausführungsform der Rahmenabschnitt zu einem Fenster hin eine oder mehrere Kantenabschnitte aufweist, die an einem fensterseitigen Unterkantenabschnitt einer Fensterkante des Rahmenabschnitts zum Innenraum hin abgeflacht sind mit einer vorbestimmten Fase und/oder einem vorbestimmten Radius.

FIG. 1 zeigt eine Nutzfahrzeug-Scheibenbremse 100 (im Folgenden auch kurz "Bremse 100"), die dazu eingerichtet ist, eine an einem Rad eines Kraftfahrzeugs (nicht dargestellte) befestigte Bremsscheibe zu verzögern. Die Bremse 100 weist einen Bremsaktuator 101 auf, der dazu eingerichtet ist, eine Bremskraft auf einen Steuerbefehl hin zu erzeugen. Gezeigt ist ein pneumatischer Bremsaktuator, alternativ können aber auch andere Arten der Krafterzeugung verwendet werden. Die Bremse 100 weist einen Bremsträger 3 auf, der dazu eingerichtet ist, am Fahrzeug im Bereich der Achse befestigt zu werden. Die Bremse 100 weist einen zuspannseitigen ersten Bremsbelag 107.1 und einen reaktionsseitigen zweiten Bremsbelag 107.2 auf. Die Bremsbeläge 107.1, 107.2 sind an einem Bremssattel 1 gemäß der Erfindung angebracht. Der gezeigte Bremssattel 1 ist ein Gleitsattel. Die Erfindung betrifft aber gleichermaßen auch Festsattelbremsen.

Außerdem weist die Bremse 100 ein Sattelgehäuse 103 mit einer Sattelabdeckung 105 aus einem gebogenen Blech auf, die auf das Sattelgehäuse 103 aufgesetzt ist und dazu eingerichtet ist, eine (nicht dargestellte) Bremsscheibe, die sich um ihre Rotationsachse R in Drehrichtung D dreht, zu übergreifen. Das Sattelgehäuse 103 mit einer Sattelabdeckung 105 aus einem gebogenen Blech wird im Folgenden mit Bezug auf eine Sattelabdeckung 5, 5', 5", 5‴ mit einem Bremsträger 3, 3' einer Bremssattelbaugruppe bzw. kurz "Bremssattels" 1 gemäß dem Konzept der Erfindung näher erläutert.

In FIG. 2A und FIG. 2B ist gemäß dem grundsätzlichen Konzept der Erfindung mit der Sattelabdeckung 5 aus einem gebogenen Blech, d.h. mit einer teilweise oder vollständig aus Blech ausgebildeten Sattelabdeckung 5 ein Bremssattel 1 gemäß einem gemäß einem Vergleichsbeispiel gezeigt. FIG. 2A zeigt, dass der Bremssattel 1 das Sattelgehäuse 103 aufweist, das zumindest partiell aus Blechsegmenten gebildet ist. Das Sattelgehäuse 103 weist die Sattelabdeckung 5 aus einem gebogenen Blech auf, die auf das Sattelgehäuse 103 aufgesetzt ist und dazu eingerichtet ist, eine (nicht dargestellte) Bremsscheibe, die sich um ihre Rotationsachse R dreht, zu übergreifen. Der Bremssattel 1 weist eine erste, fahrzeugseitige, Gehäusewand 7 auf, die als umgebogener Blechkörper ausgebildet ist. Vorzugsweise ist die fahrzeugseitige Gehäusewand 7 rechtwinklig bezogen auf die Rotationsachse R ausgerichtet, wenn das Bremssattel 1 im betriebsgemäßen Zustand montiert ist.

Die Sattelabdeckung 5 weist eine, bezogen auf die Rotationsachse R, Außenseite 6 und eine Innenseite 8 auf. Die Sattelabdeckung 5 ist ferner zur Aufnahme eines in FIG. 2B gezeigten Niederhaltebügels 31 eingerichtet, der sich von einer Zuspannseite 19 der Bremsscheibe bis hin zu einer Reaktionsseite 21 der Bremsscheibe erstreckt und die Bremsbelege in allgemein bekannter Art und Weise an einem Herausfallen aus der Bremse hindert.

Auf einer der fahrzeugseitigen Gehäusewand 7 gegenüberliegenden Seite des Bremssattels 1 ist eine Stützplatte 9 zum Abstützen eines reaktionsseitigen Bremsbelags (nicht dargestellt) vorgesehen, vorzugsweise ebenfalls aus einem Blech hergestellt - diese Stützplatte 9 ist insofern als eine reaktionsseitige Druckplatte ausgebildet. Auf der Reaktionsseite 21 des Sattelgehäuses 3 befindet sich ferner eine (erste) reaktionsseitige Halterung 11 zur Aufnahme des Niederhaltebügels 31, vgl. FIG. 2B.

Zwischen dem Sattelgehäuse 103 und der Sattelabdeckung 5 sind mehrere Gleithülsen 13 zur Aufnahme von Führungsbolzen der Scheibenbremse angeordnet. Die Konstruktion des Bremssattels 1 ist vorzugsweise vollständig ohne Gussteile ausgebildet, kann aber ein oder mehrere Schmiedeteile oder spanend hergestellte Teile aufweisen.

Der Bremssattel 1 weist eine Montageschnittstelle 15 auf, die zur Befestigung eines Bremsaktuators eingerichtet ist, und eine Anzahl Durchgangslöcher 29 für Befestigungsmittel aufweist. Das Sattelgehäuse 103 schließt in sich einen Hohlraum 23 zur Aufnahme eines Zuspannmechanismus des erwähnten zuspannseitigen ersten Bremsbelags 107.1 und reaktionsseitigen zweiten Bremsbelags 107.2 auf, der von der Fahrzeugseite her mittels einer Durchgangsöffnung 25 zugänglich ist. Durch diese Durchgangsöffnung 25 erstreckt sich im Betriebszustand ein Stößel eines Bremszylinders des erwähnten Bremsaktuators 101 hindurch, der an der Montageschnittstelle 15 befestigt ist.

Wie sich aus FIG. 2A, besser noch insbesondere aus FIG. 2B, erkennen lässt, weist das Sattelgehäuse 103 gegenüberliegend der fahrzeugseitigen Gehäusewand 7 eine zweite, bremsscheibenseitige Gehäusewand 17 auf, an der eine zweite Halterung 27 vorgesehen ist. Die zweite Halterung 27 ist in FIG. 2A, FIG. 2B zunächst in vereinfachter Weise dargestellt. Der Niederhaltebügel 31 befindet sich, wie insbesondere aus FIG. 2B erkennbar ist, im Eingriff mit der zweiten Halterung 27 auf der Zuspannseite 19, und in Eingriff mit der ersten Haltung 11 auf der Reaktionsseite 21.

Diese erste Halterung 11 weist einen von der Zuspannseite 19 fortgebogenen Haken 11.1 auf, der einteilig an der Stützplatte 9 angeformt ist, vorzugsweise mittels Umbiegen. Ist der Niederhaltebügel 31 einmal in der in FIG. 2B gezeigten Art und Weise eingehängt, kann eine Fixierung des Niederhaltebügels 31 an der Sattelabdeckung 5 erfolgen, indem ein Befestigungsmittel, beispielsweise in Form einer Schraube, in eine hierfür vorgesehene Befestigungsöffnung 12 der Sattelabdeckung 5 eingeführt wird.

Die insbesondere in FIG. 2A erkennbare Stützplatte 9 ist an der Innenseite 8 der Sattelabdeckung 5 mit einer insbesondere in FIG. 2B erkennbaren korrespondierenden Kontur 33 in Anlage und wird durch diese positionell ausgerichtet. Die Stützplatte 9 ist vorzugsweise stoffschlüssig mit der Sattelabdeckung 5 verbunden, bevorzugt mittels Schweißen. Die Ausrichtung der Stützplatte 9 an der Sattelabdeckung 5 erfolgt vorzugsweise anhand eines in FIG. 2B dargestellten Positionierkragens 35, der mittels Umbiegen entlang einer Biegekante an der Stützplatte 9 angeformt ist. Vorzugsweise erstreckt sich der Positionierkragen 35 in dieselbe Richtung, nämlich von der Zuspannseite 19 fort, an der Stützplatte 9. Die Biegekante ist vorzugsweise als Kreisbogenform ausgebildet. Die Kontur 33 kann zur punktweisen Anlage des Positionierkragens 35 ausgebildet sein, oder zur linienförmigen oder flächigen Anlage. Für die grundsätzliche Positionierung wird eine Zweipunkt-Anlage allerdings ausreichend sein.

FIG. 3 zeigt die Sattelabdeckung 5 des Vergleichsbeispiels als einstückiges Formteil gemäß dem grundsätzlichen Konzept der Erfindung mit der erkennbaren Stützplatte 9 an der Innenseite 8 der Sattelabdeckung 5. Die Sattelabdeckung 5 des Vergleichsbeispiels, bei der bereits vorgesehen ist, dass eine rahmenartige Kontur und die bogenartige Kontur eines Rahmenabschnitts 52 als einstückiges Formteil ausgebildet ist, ist noch verbesserbar im Rahmen der Erfindung, was anhand der folgenden Ausführungsbeispiele der Ansichten in den FIG. 4 bis FIG. 9 erläutert wird.

Die Verbesserungen finden sich gemäß der folgenden Ausführungsbeispiele besonders in den mit Bezugszeichen 10, 20, 30 gekennzeichneten Bereichen 10, 20, 30 der Sattelabdeckung 5, d.h. den Außenkantenbereichen 10.1, 10.2 (Ansichten der FIG. 4, FIG. 5, FIG. 8), dem Außen- und Innenseitenbereich 20.1, welcher der Seitenwand mit der Außenseite 6 der Sattelabdeckung 5 zugeordnet ist (FIG. 4A, FIG. 4B und FIG. 5A, FIG. 5B) und dem Innenseitenbereich 20.2, welcher u.a. der Stützplatte 9 zugeordnet ist (Ansichten der FIG. 6, FIG. 7), und den Innenkantenbereichen 30 der Sattelabdeckung 5 zum Innenraum 24 hin (Ansichten der FIG. 9).

Im Folgenden werden vorteilhafte Sattelabdeckungen 5',5", 5‴ gemäß dem Konzept der Erfindung beschrieben, die an der rahmenartigen Kontur, insbesondere an der Außenseite, eine formabweichende Einwölbung und/oder an der bogenartigen Kontur, insbesondere wenigstens einem der Ränder, eine formabweichende Auskragung aufweisen. Insofern ist bei den vorteilhaften Sattelabdeckungen 5`,5", 5‴ zudem die Anbringung von Sicherheitselementen und Herstellungselementen in der erfindungsgemäßen Weise am einstückigen Formteil vorgesehen. Der Einfachheit halber wird auf bisherige Bezugszeichen zurückgegriffen, wobei im Folgenden auf die wesentlichen Verbesserungen eingegangen wird, betreffend die weitergebildeten Sattelabdeckungen 5', 5", 5‴ gemäß dem Konzept der Erfindung und entsprechend der Sattelabdeckungsanordnungen 50', 50", 50‴ der ersten, zweiten und dritten Ausführungsform.

FIG. 4A zeigt eine gegenüber dem Vergleichsbeispiel der Sattelabdeckung verbesserte erste bevorzugte Ausführungsform einer Sattelabdeckungsanordnung 50' mit einer verbesserten Sattelabdeckung 5' die im Folgenden erläutert ist. Auch diese weist, wie erläutert, einen Domabschnitt 51 und einen Rahmenabschnitt 52 auf, wobei im Folgenden besonders auf den Rahmenabschnitt Bezug genommen wird. Der Rahmenabschnitt 52 ist im Hinblick auf den vorgenannten Außen- und Innenseitenbereich 20.1 und dem Außenkantenbereich 10.1 mit Vorteil verändert, um eine Bewegung des Bremssattels 1 zu begrenzen. In FIG. 4B ist eine entsprechende Seitenansicht der verbesserten Sattelabdeckung 5' als Teil der verbesserten Sattelabdeckungsanordnung 50' gezeigt, wobei mit "O" eine außenliegende Reaktionsseite (also Fahrzeugaußenseite bzw. außenliegend dem Fahrzeug abgewandt) gekennzeichnet ist, und mit "I" eine Zuspannseite (also Fahrzeuginnenseite bzw. innenliegend der Zuspannseite gegenüberliegend) gekennzeichnet ist. Auf beide FIG. 4A, FIG. 4B wird im Folgenden zusammen Bezug genommen.

Wie dort deutlich zu erkennen, weist die verbesserte Sattelabdeckung 5' im Rahmenabschnitt 52 des einstückigen Formteils der Sattelabdeckung 5' eine rahmenartige Kontur KR mit einer Außenseite A als auch eine bogenartige Kontur KB auf, die sich zwischen zwei Rändern R1, R2 wölbt - einem ersten in Drehrichtung D vorderen Rand R1 und einem zweiten in Drehrichtung D hinteren Rand R2. Die rahmenartige Kontur KR umfasst oder berandet, wenn man so will, umlaufend als Außenkontur die Sattelabdeckung 5' und die bogenartige Kontur KB erstreckt sich gewölbt zwischen dem ersten und zweiten Rand R1, R2 über den darunterliegenden Innenraum 24 der Sattelabdeckung 5'. Der Innenraum 24, insbesondere für die Bremsbeläge 107.1, 107.2, ist über ein Fenster F zugänglich; das Fenster F ist sozusagen als Ausnehmung aus der bogenartigen Kontur KB zu verstehen und bietet so Zugang zum Innenraum 24. Das Fenster gibt vorliegend -wie in FIG. 1 und FIG. 6 erkennbar-- im Grunde die Sicht frei auf einen Bremsträger 3, 3'. In der Seitenansicht der FIG. 4B ist die rahmenartige Kontur KR als auch die bogenartige Kontur KB seitlich erkennbar, jeweils mit der vorgenannten Außenseite A der rahmenartigen Kontur KR bzw. dem in Drehrichtung D vorderen Rand R1 der bogenartigen Kontur KB und der Ausnehmung in Form des Fensters F. Anders formuliert erstreckt sich -in etwa-- die bogenartige Kontur KB über ein Sattelgehäuse in Drehrichtung D und es erstreckt sich die rahmenartige Kontur KR umfänglich um das Sattelgehäuse oberhalb eines Bremsträgers 3, 3'. Die rahmenartige Kontur KR und die bogenartige Kontur KB gehen ineinander über insbesondere im Bereich ihrer Ränder R1 bzw. R2. Die bogenartige Kontur KB ist auch auf dem Domabschnitt 51 gebildet; ebenso kann die rahmenartige Kontur KR auf dem Domabschnitt 51 gefunden werden, wie dies in FIG. 4B erkennbar ist.

Gemäß dem Konzept der Erfindung sind nun Sicherheitselemente E1, E2 an der Sattelabdeckung 5' bzw. der Sattelabdeckungsanordnung 50' vorgesehen, um eine Bewegung des Bremssattels 1 entlang der Rotationsachse R zu begrenzen, was im vorliegenden Fall für den Bremssattel 1 in Form eines Gleitbremssattels besonders relevant ist.

Das erste Sicherheitselement E1 im Außenkantenbereich 10, 10.1 ist als eine zu den Konturen KR, KB formabweichende Auskragung gebildet, nämlich als ein nach untenseitig vorstehendes Fortsatzstück, das in FIG. 5B im Detail am Rand R1 der bogenartigen Kontur KB dargestellt ist. Das entsprechende am zweiten Rand R2 gebildete weitere Sicherheitselement E1 dieser Art --konkret mit E1.2 bezeichnet-- ist in FIG. 4A erkennbar und analog dem Sicherheitselement E1.1 ausgeführt als formabweichende Auskragung, die als ein nach untenseitig vorstehendes Fortsatzstück am zweiten Rand R2 ausgebildet ist.

Beide Sicherheitselemente E1.1, E1.2 haben einen in FIG. 5B erkennbaren Anschlag B, der in den Bereich des Innenraums 24 ragt und zwar auf der Innenseite "I" des Rahmenabschnitts 52. Für den als Gleitbremssattel ausgebildeten Bremssattel 1 bedeutet dies, dass er bei einer Bewegung entlang der Rotationsachse R sich nicht weiter zur Zuspannseite (also zur Fahrzeuginnenseite) hinbewegen (oder gleiten) kann als es durch den Anschlag B des Fortsatzstücks des Sicherheitselements E1, E1.2, E1.2 zugelassen ist. Die durch die Anschlagfläche des Anschlags B gebildete innere Begrenzungsfläche BFI ist in FIG. 4B als gestrichelte Linie eingezeichnet und fluchtet mit der Anschlagfläche des Anschlags B des Sicherheitselements E1.

Des Weiteren ist das einstückige Formteil der weitergebildeten Sattelabdeckung 5' an seiner Außenseite A der rahmenartigen Kontur KR mit einer formabweichenden Einwölbung W versehen, die sozusagen das zweite Sicherheitselement E2 ausbildet. Vorliegend erstreckt sich abgesetzt von der Außenseite A der rahmenartigen Kontur KR die formabweichende Einwölbung W jeweils zur Ecke E hin; d.h. zur Ecke E der rahmenartigen Kontur KR bzw. der Sattelabdeckung 5' hin. Das Sicherheitselement E2 umfasst also vorliegend ein in Drehrichtung vorderes Sicherheitselement E2.1 und ein in Drehrichtung hinteres Sicherheitselement E2.2. Beide Sicherheitselement E2.1, E2.2 sind als sogenannte formabweichende Einwölbung zu dem im übrigen einstückigen Formteil der Sattelabdeckung 5` gebildet. Die Außenfläche A weist insofern einen erhabenen Teil auf, der in FIG. 4A und FIG. 4B an der Stelle des Bezugszeichens A deutlich erkennbar ist und ebenso zur Ecke E hin einen nach innenseitig eingewölbten Bereich W.

Der eingewölbte Bereich --also die Einwölbung W-- ist in FIG. 4A deutlich zu erkennen an der genannten Ecke E der rahmenartigen Kontur KR, bzw. der Sattelabdeckung 5', wobei die formabweichende Einwölbung W sich erkennbar als eine nach innenseitig vorstehende Einprägung oder Eindellung ausbildet. Diese nach innenseitig vorstehende Einprägung oder Eindellung infolge der Einwölbung W bildet damit als zweites Sicherheitselement E2 eine auf der Fahrzeugaußenseite liegende (d.h. im Bereich O des Rahmenabschnitts 52 liegende) Begrenzung. Diese begrenzt somit zur Reaktionsseite hin (diesseits mit O gekennzeichnet) die Bewegung eines als Gleitbremssattel ausgebildeten Bremssattels 1, der als Gleitbremssattel ausgebildet ist.

Die entsprechende äußere Begrenzungsfläche BFO ist in gestrichelter Linie in der FIG. 4B zusammen mit der innenliegenden Begrenzungsfläche BFI eingezeichnet. Man kann also sagen, dass durch die außenliegende Einwölbung W an der Außenseite A der rahmenartigen Kontur KR auf der Außenseite O --d.h. zur Reaktionsseite hin-- eine Begrenzung in Form der Begrenzungsfläche BFO für einen Gleitbremssattel 1 ausgebildet ist, wobei ein entsprechender Anschlag für den Gleitbremssattel 1 durch die nach innenseitig vorstehende Einprägung oder Eindellung der Einwölbung W entsteht. Entsprechend wird durch die Sicherheitselemente E1, E1.1, E1.2 als die formabweichenden Auskragungen der nach untenseitig vorstehenden Fortsatzstücke mit entsprechender Anschlagfläche auf der Innenseite I, --d.h. zur Zuspannseite hin-- die Bewegung eines Gleitbremssattels 1 begrenzt.

Ein Gleitbremssattel 1 ist in dem in FIG. 4B gezeigten Gleitbereich BFS entlang der Rotationsachses R positioniert. Damit ist zum einen auf der Innenseite I die Zuspannvorrichtung im Hohlraum 23 des Sattelgehäuses 103 geschützt und zum anderen eine Beschädigung der Sattelabdeckung 5' bzw. des in FIG. 1 gezeigten und in FIG. 4B jedenfalls erkennbaren Sattelgehäuses auf dessen Außenseite O vermieden. Vor allem kann sich der Bremssattel 1 -bezogen auf die in FIG. 4B eingezeichnete Mittellinie als Referenz-- ein wenig nach vorne (gegen Drehrichtung D) und relativ mehr nach hinten (in Drehrichtung D) bewegen, um den Verschleiß von Bremsbelägen (z.B. der Bremsbeläge 107.1, 107.2 der FIG. 1) und einer Bremsscheibe zu berücksichtigen. Eine nur begrenzte Bewegung in Vorwärtsrichtung (gegen Drehrichtung D) schützt die in FIG. 6A auf der rechten Seite unterhalb des Sicherheitselements E1.1 sichtbare Manschette vor Beschädigungen. Eine nur begrenzte Bewegung in Rückwärtsrichtung (in Drehrichtung D) schützt vor zu großer Abnutzung des äußeren Bremsbelags und der äußeren Rotorseite. Man könnte auch sagen, dass u.a. durch die Einwölbung W die Sattelabdeckung 5' auf der Außenseite A verstärkt ausgeführt ist, was sich bereits aufgrund der gegenüber der erhabenen Außenfläche A eingeprägten oder eingedellten Einwölbung W strukturell ergibt.

Damit bietet die Sattelabdeckung 5' eine verbesserte Sicherheitsstruktur im Betrieb, die letztendlich durch die Sicherheitselemente E1 und E2 in der zuvor erläuterten Weise realisiert ist.

Betreffend dieses erste Ausführungsbeispiel einer verbesserter Sattelabdeckung 5' ist diese Maßgabe in seiner Funktionalität verdeutlicht in den FIG.6A bis FIG 6C auf die im Folgenden insgesamt im Rahmen der Erläuterung Bezug genommen wird. FIG.6A bis FIG 6C zeigt wie ein Gleitbremssattel 1 in seiner Bewegung zur Zuspannseite (also auf der Innenseite I) und zur Reaktionsseite (also auf der Außenseite O) in seiner Bewegung begrenzt ist entlang der Rotationsachse R.

Der Bremssattel 1 ist vorliegend mit dem Bremsträger 3' dargestellt, auf dem auch die Drehrichtung D für die Bremsscheibe (nicht gezeigt) angegeben ist.

Eingezeichnet für diese gemäß der ersten Ausführungsform ausgeführte Anordnung eines Bremssattels 1 mit weitergebildeter Sattelabdeckung 5' sind auch die zuvor erläuterten Sicherheitselemente E1 und E2 in Form einerseits der formabweichenden Auskragung als wenigstens ein nach untenseitig vorstehendes Fortsatzstück (E1, E1.1) im Außenkantenbereich 10.1 auf der Innenseite I und der Einwölbung W im Vergleich zur erhabenen Außenseite A auf eben jener Außenseite A der rahmenartigen Kontur KR.

Der Bremsträger 3' wiederum, der vorliegend entsprechend der hier gezeigten Weiterbildung für den Gleitbremssattel besonders hergerichtet ist, hat den Sicherheitselementen E1, E2 zugeordnete, d.h. zum Anschlag mit den vorgenannten Anschlagflächen B für eben genau diesen Anschlag auf der Außenseite ausgebildete Ausstülpungen C1, für das erste Sicherheitselement E1 bzw. das zweite Sicherheitselement E2.

In FIG. 6B ist dies konkreter gezeigt für eine Position des Bremsträgers 3' auf der Innenseite I wo sich die Ausstülpung C1 im Kontakt K1, d.h. im Anschlag, mit der Anschlagfläche BF des Sicherheitselements E1 befindet.

In FIG. 6C ist entsprechend für die Einwölbung W zur Ausbildung des zweiten Sicherheitselements E2, die diesem zugeordnete Ausstülpung C2 auf dem Bremsträger 3' gezeigt. Diese Ausstülpung ist vorliegend eher als eine Art Noppe oder Horn auf dem Bremsträger 3' gebildet; d.h. zum Anschlag an der Kontaktfläche K2 mit der durch die Einwölbung W gebildeten Eindellung. Man kann also so erkennen, dass hier der zweite Kontakt K2 die zweite Anschlagfläche für die zweite, d.h. außenseitige Anschlagfläche BFO, definiert und der erste Kontakt K1 die erste, d.h. innenseitige Anschlagfläche BFI, definiert.

Bezugnehmend auf FIG. 7A und FIG. 7B ist eine zur ersten Ausführungsform abgewandelte Ausführungsform gezeigt zur Bildung eines ersten Sicherheitselements E1 bzw. eines zweiten Sicherheitselements E2 mit entsprechenden Anschlägen B.

In FIG. 7A ist erkennbar, dass zusätzlich oder alternativ (in diesem Fall zusätzlich) zu einer Einwölbung W auf der Außenseite A einer Sattelabdeckung 5', 5" ein erhabener Teil an der Sattelabdeckung 5', 5"oder auch einer Stützplatte 9 selbst ausgebildet werden kann und/oder es ist die Stützplatte 9 selbst, die auf dem erhabenen Teil an der Sattelabdeckung 5', 5" aufliegt, um als ein zweites Sicherheitselement E2 zur Verfügung zu stehen. Dies kann aber muss nicht einhergehen mit einer entsprechenden Einwölbung W auf der Außenseite A einer Sattelabdeckung 5', 5" oder der Stützplatte 9. Es kann also ein Anschlag mittels eines Wulstes (z.B. in Form des genannten erhabenen Teils an der Außenseite A oder der Stützplatte 9 selbst) ausgebildet werden.

Allgemein kann aber ein als zweites Sicherheitselement E2 dienender Bereich --sozusagen als vorgelagerter, auf der Außenseite O liegender Kontaktbereich K2-- ausgebildet sein, um die Bewegung eines Bremssattels nach außen zu begrenzen auch ohne die Einwölbung W auf der Außenseite A einer Sattelabdeckung 5', 5".

In FIG. 7B ist des Weiteren ein erstes Sicherheitselement E1 gezeigt, das ebenfalls als eine formabweichende Auskragung gebildet ist. Hier ist das nach untenseitig vorstehende Fortsatzstück an der Rahmenkontur KR erkennbar in einem Fügebereich FB an diese Rahmenkontur KR mit entsprechendem Element angefügt (beispielsweise durch Schweißen oder Löten - insofern angefügt und weniger integral mit der Rahmenkontur KR des Rahmenabschnitts 52 gebildet). Ein solches Fortsatzstück kann auch an der Stützplatte 9 selbst angefügt werden.

Es kann auch in einer hier in FIG. 7C und FIG. 7D näher gezeigten Ausführungsform ein Sicherheitselement E2, E2.1 einfach durch eine verlängerte Trägerplatte 9 für einen Bremsbelag realisiert werden; ein das Sicherheitselement E2, E2.1 ausbildender Anschlag befindet sich dann auf der Trägerplatte 9 selbst bzw. wird mittels der Trägerplatte 9 selbst ausgebildet, so dass die vorgenannte Einwölbung W auf der Außenseite A iVm mit der Ausbuchtung an der Sattelabdeckung 5ʺʺ (zur Realisierung des vorgenannten erhabenen Teils der Stützplatte 9, der in den Innenraum 24 ragt) im Grunde nicht benötigt wird. FIG. 7C zeigt insofern diese Ausführungsform, bei welcher die Sattelabdeckung 5ʺʺ ohne Einwölbung W auskommt und die Stützplatte 9 eine formabweichende Auskragung aufweist und/oder einen in den Innenraum 24 ragenden erhabenen Teil aufweist zur Bildung eines Sicherheitselements E2, E2.1.

Anders ausgedrückt kann dazu die in FIG. 7C und Fig. 7D gezeigte Stützplatte 9 selbst dann dorthin zeigen, wo die Kontaktfläche K2 der FIG. 7A angeordnet ist; die Kontaktfläche K2 zeigt auf die Auflagefläche eines Bremsbelags. Die vorgenannte Einwölbung W auf der Außenseite A iVm mit der Ausbuchtung kann dann m.E. entfallen. Die hier in FIG. 7C und FIG. 7D gezeigte Ausführungsform umfasst dann also ggfs. eine separate Platte oder alternative Trägerplatte, die sozusagen einen Spalt zwischen der Sattelabdeckung 5 und der Trägerplatte 9 --wie sie in FIG. 2A, FIG.4A und FIG. 6A und FIG. 7A erkennbar ist-- schließt.

FIG. 8A, FIG. 8B und FIG. 8C zeigt eine zweite Ausführungsform einer Sattelabdeckungsanordnung 50" für eine Sattelabdeckung 5". Auch hier wird auf gleiche oder ähnliche Merkmale oder Merkmale gleicher oder ähnlicher Funktion und wiederum auf die zuvor genannten Bezugszeichen zurückgegriffen. Im Folgenden wird vor allem auf die Unterschiede zum Vergleichsbeispiel der FIG. 2, FIG. 3, Bezug genommen.

Die zweite Ausführungsform einer Sattelabdeckung 5" ist mittels der hier gezeigten Herstellungselemente H1, H2 an der rahmenartigen Kontur KR in besonders vorteilhafter Weise für eine Herstellung weitergebildet, wobei auch hier an der rahmenartigen Kontur eine formabweichende Einwölbung bzw. an der bogenartigen Kontur eine formabweichende Auskragung vorgesehen ist.

Diese Bereiche 10, 20 sind --wie in FIG. 3 bereits angezeigt-- mit entsprechenden Au-ßenkantenbereichen 10.2 und Innenseitenbereichen 20.2 gekennzeichnet. Teilweise jedenfalls können die hier gezeigten Herstellungselemente H1, H2 an der rahmenartigen Kontur KR auch als Sicherheitselemente E1 bzw. E2 genutzt werden.

Vorliegend ist vorgesehen, dass die weitergebildete Sattelabdeckung 5" im Bereich einer äußeren Umrandung, d.h. an den Rändern R1, R2 --vorliegend des Domabschnitts 51 betreffend die Herstellungselemente H1 und des Rahmenabschnitts 52 betreffend die Herstellungselemente H2-- eben jene formabweichende Auskragung als einen oder mehrere Flachabschnitte aufweist.

Die Flachabschnitte sind in FIG. 8A und FIG. 8B und FIG. 8C als in Drehrichtung D vorderer Flachabschnitt H1.1 und als in Drehrichtung D hinterer Flachabschnitt H1.2 bzw. H2.1 H 2.2. gezeigt. Konkret ist ein Flachabschnitt H1, H2 grundsätzlich in vorbestimmter Weise berandet und setzt sich von der Form eines einstückigen Formteils der Sattelabdeckung 5" ab.

Die Absetzung erfolgt derart, dass der Flachabschnitt H1, H2 eine Angriffsfläche derart ausbildet, dass hier ein Klemm- oder Haltewerkzeug greifen --oder allgemein gesagtansetzen kann.

Es hat sich gezeigt, dass bei einer einstückigen Formgebung sozusagen insgesamt mit Krümmungsradien und Wölbungen bei der Herstellung gleichwohl gewährleistet werden sollte, dass die Sattelabdeckung 5" von entsprechenden maschinellen Greif- oder Haltewerkzeugen angegriffen werden kann - dazu eignen sich in bevorzugter Weise aber weniger gewölbte Bereiche; diese sind bei der weitergebildeten Sattelabdeckung 5" als einstückiges Formteil nur begrenzt vorhanden bzw. zugänglich. Die vorteilhaft ausgebildeten Flachabschnitte H1, H2 lassen sich jedoch auch von entsprechenden maschinellen Greif- oder Haltewerkzeugen angreifen.

Ein hier gezeigter Flachabschnitt H1, H2 kann an einem Halbzeug des Formteils der Sattelabdeckung 5" auf-, an- oder eingeformt sein, insbesondere auf-, an- oder eingedrückt sein in das Formteil. Gut erkennbar ist bei der Ansicht der FIG. 8C ein angeformtes Herstellungselement H1 und ein eingedrücktes Herstellungselement H2 am Rand R1 der Rahmenkontur KR.

Eine dritte bevorzugte weitergebildete Ausführungsform zeigt eine Sattelabdeckung 5‴ einer Sattelabdeckungsanordnung 50‴, wobei wiederum die Sattelabdeckung 5‴ mit einem Domabschnitt 51 und einem Rahmenabschnitt 52 ausgebildet ist. Der Rahmenabschnitt 52 hat in der zuvor erläuterter Weise wiederum eine Bogenkontur KB, die sich zwischen zwei Ränder R1, R2 erstreckt und insofern ein Sattelgehäuse (nicht gezeigt) überwölbt und damit den Innenraum 24 übergreift.

Einen Zugriff zum Bremsträger 3, 3' (wie in Fig. 1 gezeigt) bzw. den Bremsbelägen (nicht gezeigt) bietet ein Fenster F in der Bogenkontur KB des Rahmenabschnitts 52, wobei das Fenster F als Ausnehmung zur Bogenkontur KB einen oder mehrere Kantenabschnitte des Rahmenabschnitts ausbildet. Die Kantenabschnitte sind, wie in FIG. 9A, FIG. 9B und FIG. 9C ersichtlich, in Drehrichtung (also sozusagen quer zur Drehrichtung D verlaufend) vorliegend mittels dem in Drehrichtung hinteren Kantenabschnitt FK2 bzw. mittels dem in Drehrichtung vorderen Kantenabschnitt FK1 gebildet (nicht gezeigt).

FIG. 9B zeigt eine erste Abwandlung der dritten Ausführungsform, bei welcher ein solcher Kantenabschnitt FK2, in vorbestimmter Weise abgeflacht ist. Entsprechend ist in einer ersten Variante am hinteren Kantenabschnitt FK2 eine in vorbestimmter Weise vorgesehene Abflachung durch einen vorbestimmt ausgebildeten Radius ausgebildet, d.h. in dem Fall als ein in vorbestimmter Weise ausgebildeter Radius FKR am Kantenabschnitt des Rahmenabschnitts 52.

FIG. 9C zeigt eine zweite Abwandlung der dritten Ausführungsform, bei welcher ein solcher Kantenabschnitt FK2, in vorbestimmter Weise abgeflacht ist. Im Fall der FIG. 9C ist der Kantenabschnitt FK2 mit einer zum Fenster F in vorbestimmter Weise ausgebildeten Fase FKF versehen, d.h. praktisch als abgekanteter Kantenabschnitt. Die Fase FKF ist in FIG. 9C zu erkennen am hinteren Kantenabschnitt FK2.

Zusammenfassend sind vorliegend Ausführungsformen beschrieben, die eine Weiterentwicklung einer Sattelabdeckungsanordnung für einen Bremssattel für eine Kraftfahrzeug-Scheibenbremse, wenigstens umfassend eine Sattelabdeckung, betreffen.
Die Sattelabdeckungsanordnung umfasst bei den Ausführungsformen die Sattelabdeckung und ein oder mehrere Anbauteile wie optional eine fahrzeugseitige Gehäusewand oder wie vorliegend eine dem gegenüberliegende fahrzeugabseitige Stützplatte. Die Sattelabdeckung ist ausgebildet, einen Bremsträger des Bremssattels, insbesondere Gleitbremssattels, oberseitig abzudecken, wobei
- eine Bremsscheibe entlang einer Rotationsachse R der Bremsscheibe von einer Zuspannseite der Bremsscheibe bis hin zu einer Reaktionsseite der Bremsscheibe mit einer rahmenartigen Kontur der Sattelabdeckung übergriffen ist, die von einer der Reaktionsseite zugeordneten Außenseite der Sattelabdeckung abgeschlossen wird,
- mit einer in Richtung einer Drehrichtung D der Bremsscheibe bogenartigen Kontur gebildet ist, die sich zwischen in Drehrichtung gegenüberliegenden Rändern der Sattelabdeckung erstreckt,.

Gemäß dem Konzept der Erfindung ist zur Lösung der Aufgabe vorgesehen, dass die Sattelabdeckung als ein die rahmenartige Kontur und die bogenartige Kontur eines Rahmenabschnitts 52 ausbildendes einstückiges Formteil gebildet ist, insbesondere teilweise oder vollständig aus Blech. Dabei weist weiter erfindungsgemäß das einstückige Formteil
- an der rahmenartigen Kontur, insbesondere an der Außenseite, eine formabweichende Einwölbung, und/oder
- an der bogenartigen Kontur, insbesondere wenigstens einem der Ränder, eine formabweichende Auskragung auf.

Im Einzelnen sind dazu in den Ansichten der FIG. 4 bis FIG. 7 Ausführungsformen beschrieben, bei denen
- wenigstens einer der Ränder der bogenartigen Kontur oder die bogenartige Kontur selbst an seiner der Zuspannseite zugeordneten Innenseite der Sattelabdeckung die formabweichende Auskragung als wenigstens ein nach untenseitig vorstehendes Fortsatzstück trägt, das ausgebildet ist, eine Bewegung des Bremssattels, insbesondere Gleitbremssattels, zur Zuspannseite (zur Fahrzeuginnenseite, nach innen) zu begrenzen, und
- wenigstens die Außenseite der rahmenartigen Kontur oder die rahmenartige Kontur selbst die formabweichende Einwölbung als wenigstens eine nach innenseitig vorstehende Einprägung oder Eindellung trägt, die ausgebildet ist, eine Bewegung des Bremssattels, insbesondere Gleitbremssattels, zur Reaktionsseite (zur Fahrzeugaußenseite, nach außen) zu begrenzen.

Im Einzelnen sind dazu in den Ansichten der FIG. 8 eine Ausführungsform beschrieben, bei der die Sattelabdeckung 5 im Bereich einer äußeren Umrandung, insbesondere der Ränder des Domabschnitts 51 und/oder der Rahmenabschnitts 52, die formabweichende Auskragung als einen oder mehrere Flachabschnitte aufweist, wobei ein Flachabschnitt sich vorbestimmt berandet von der Form des einstückigen Formteils der Sattelabdeckung absetzt, derart dass der Flachabschnitt eine Angriffsfläche für eine Klemm- oder Haltewerkzeug bildet.

Im Einzelnen ist dazu in FIG. 9A, FIG. 9B und FIG. 9C eine Ausführungsform beschrieben, bei der der Rahmenabschnitt 52, insbesondere zu einem Fenster hin, eine oder mehrere Kantenabschnitte des Rahmenabschnitts 52 aufweist, die, insbesondere wenigstens ein fensterseitiger Unterkantenabschnitt einer Fensterkante des Rahmenabschnitts 52 zum Innenraum 24 hin, in vorbestimmter Weise abgeflacht sind.

Zusammenfassend sind vorliegend verschiedene Ausführungsformen einer Sattelabdeckungsanordnung 50',50", 50‴ für eine Bremssattelbaugruppe 1 für eine Nutzfahrzeug-Scheibenbremse 100 erläutert worden. Die Sattelabdeckungsanordnung 50',50", 50‴ umfasst wenigstens eine Sattelabdeckung 5`,5", 5‴, 5ʺʺ oder wenigstens die Sattelabdeckung 5`,5", 5‴, 5ʺʺ und ein oder mehrere Anbauteile wie eine fahrzeugabseitige Stützplatte 9. Insbesondere umfasst die Sattelabdeckung 5`,5", 5‴, 5ʺʺ zudem eine dieser fahrzeugabseitigen Stützplatte 9 gegenüberliegende bremsscheibenseitige Gehäusewand 17 und/oder fahrzeugseitige Gehäusewand 7 eines Sattelgehäuses 103, welche Sattelabdeckung 5`,5", 5‴, 5ʺʺ ausgebildet ist, ein Sattelgehäuse 103 oberseitig abzudecken, wobei
- eine Bremsscheibe entlang einer Rotationsachse R von einer Zuspannseite I
   bis hin zu einer Reaktionsseite O mit einer Rahmenkontur KR der Sattelabdeckung 5',5", 5‴, 5"" übergriffen werden kann, und wobei die Sattelabdeckung 5',5", 5‴, 5ʺʺ eine der Reaktionsseite O zugeordnete fahrzeugabseitige Außenseite A aufweist, und
- mit einer in Richtung einer Drehrichtung D der Bremsscheibe Bogenkontur KB gebildet ist, die sich zwischen in Drehrichtung gegenüberliegenden Rändern R1, R2 der Sattelabdeckung erstreckt. Gemäß dem Konzept der Erfindung ist bei den Ausführungsformen vorgesehen, dass die Sattelabdeckung 5`,5", 5‴, 5""als ein die Rahmenkontur KR und die Bogenkontur KB eines Rahmenabschnitts 52 ausbildendes einstückiges metallisches Formteil gebildet ist, insbesondere Formblechteil gebildet ist, insbesondere teilweise oder vollständig aus Blech gebildet ist, wobei
- das einstückige Formteil an der Bogenkontur KB, insbesondere an wenigstens einem der Ränder R1, R2, eine formabweichende Auskragung E1 aufweist, und/oder
- die fahrzeugabseitige Stützplatte 9 eine formabweichende Auskragung aufweist und/oder einen in den Innenraum 24 ragenden erhabenen Teil aufweist.

Bei einigen der verschiedenen Ausführungsformen ist auch vorgesehen, dass
- das einstückige Formteil an der Rahmenkontur KR, insbesondere an der Außenseite A, eine formabweichende Ausstülpung (Fig. 7C) aufweist, oder.
- das einstückige Formteil an der Rahmenkontur KR, insbesondere an der Außenseite A, eine formabweichende Einwölbung W, E2 aufweist.

Die Ausführungsformen weisen weiter ein Sattelgehäuse 103 auf, mit einer bremsscheibenseitigen Gehäusewand 17 und einer fahrzeugseitigen Gehäusewand 7 des Sattelgehäuses 103.

Bei einigen der verschiedenen Ausführungsformen ist auch vorgesehen, dass die Sattelabdeckung 5',5", 5‴, 5ʺʺ ausgebildet ist, einen Hohlraum 23 des Sattelgehäuses 103 zur Aufnahme eines Zuspannmechanismus abzudecken und die Sattelabdeckung ausgebildet ist, einen Innenraum 24 zur Aufnahme eines Bremsträgers 3, 3' zu übergreifen, und die Sattelabdeckung 5`,5", 5‴, 5ʺʺ als ein einen Domabschnitt 51 und den Rahmenabschnitt 52 mit der Rahmenkontur und der Bogenkontur KR, KB ausbildendes einstückiges Formteil gebildet ist, wobei der Domabschnitt 51 nach außen gewölbt ist zur Abdeckung des Hohlraums 23, insbesondere für einen Zuspannmechanismus, und der Rahmenabschnitt 52 ein Fenster F zu einem Innenraum 24, insbesondere für Bremsbeläge 107.1, 107.2, berandet.

Bei einigen der verschiedenen Ausführungsformen ist auch vorgesehen, dass die Sattelabdeckungsanordnung die Sattelabdeckung 5`,5", 5‴, 5ʺʺ und die fahrzeugabseitige Stützplatte 9 umfasst, wobei die fahrzeugabseitige Stützplatte 9 selbst, eine formabweichende Einwölbung und/oder die formabweichende Auskragung aufweist.

Das Konzept der Erfindung ist auch beschrieben anhand einer Ausführungsform mit einer Bremssattelbaugruppe 1, insbesondere Bremssattel für eine Kraftfahrzeug-Scheibenbremse 100, insbesondere für eine Nutzfahrzeug-Scheibenbremse mit einer um eine Rotationsache R herum bewegten Bremsscheibe, insbesondere für eine Gleitsattelbremse, mit einem Bremsträger 3, 3' und mit einer Sattelabdeckungsanordnung 50'; 50", 50‴ gemäß den zuvor erläuterten Ausführungsformen entsprechend dem Konzept der Erfindung, mit einem Sattelgehäuse 103 mit einem Hohlraum 23 zur Aufnahme eines Zuspannmechanismus. Insbesondere umfasst die Sattelabdeckungsanordnung 50'; 50", 50‴ die Sattelabdeckung 5'; 5", 5‴ und ein oder mehrere Anbauteile wie eine fahrzeugabseitige Stützplatte 9, insbesondere zudem eine dieser gegenüberliegende bremsscheibenseitige Gehäusewand 17 und fahrzeugseitige Gehäusewand 7 des Sattelgehäuses 103, welche Sattelabdeckung 5`,5", 5‴, 5""ausgebildet ist, das Sattelgehäuse 103 oberseitig abzudecken, und es ist auch ausgebildet die Bremsscheibe von einer Zuspannseite I bis hin zu einer Reaktionsseite O zu übergreifen und wobei die Sattelabdeckung 5`,5", 5‴, 5ʺʺ eine der Reaktionsseite O zugeordnete fahrzeugabseitige Außenseite A aufweist.

Andere Variationen der offengelegten Ausführungsformen können vom Fachmann bei der Ausführung der beanspruchten Erfindung anhand der Zeichnungen, der Offenbarung und der beigefügten Ansprüche verstanden und ausgeführt werden. Es ist möglich und erfindungsgemäß vorgesehen, die Merkmale der verschiedenen, hier vorstehend beschriebenen Ausführungsbeispiele miteinander zu kombinieren, solange sie sich technisch nicht gegenseitig ausschließen.

In den Ansprüchen schließt das Wort "umfassend" andere Elemente oder Schritte nicht aus, und der unbestimmte Artikel "ein" oder "an" schließt eine Mehrzahl nicht aus.

Eine einzige Einheit oder Vorrichtung kann die Funktionen mehrerer in den Ansprüchen aufgeführter Elemente erfüllen. Die Tatsache, dass bestimmte Maßnahmen in verschiedenen voneinander abhängigen Ansprüchen aufgeführt sind, bedeutet nicht, dass eine Kombination dieser Maßnahmen nicht vorteilhaft sein kann.

Etwaige Bezugszeichen in den Ansprüchen sind nicht als Einschränkung des Anwendungsbereichs zu verstehen.

### Bezugszeichenliste (Teil der Beschreibung)

- 1: Bremssattelbaugruppe, kurz: Bremssattel
- 3, 3': Bremsträger
- 5, 5', 5", 5‴: Sattelabdeckung
- 6: Außenseite der Sattelabdeckung
- 7: Gehäusewand, fahrzeugseitig
- 8: Innenseite der Sattelabdeckung
- 9: Stützplatte, reaktionsseitige Druckplatte
- 11, 11.1: Halterung, Haken für Niederhalter, reaktionsseitig
- 12: Befestigungsöffnung
- 13: Gleithülsen für Führungsbolzen
- 15: Montageschnittstelle
- 17: bremsscheibenseitige Gehäusewand
- 19: Zuspannseite

- 10, 20, 30: Bereiche der Sattelabdeckung 5
- 10.1, 10.2: Außenkantenbereiche
- 20.1, 20.2: Außen- und Innenseitenbereich
- 30: Innenkantenbereich zum Innenraum 24 hin

- 21: Reaktionsseite
- 23: Hohlraum
- 24: Innenraum
- 25: Durchgangsöffnung, fahrzeugseitige Gehäusewand
- 27: Halterung 27 auf der Zuspannseite 19
- 29: Durchgangslöcher
- 31: Niederhaltebügel
- 33: Kontur
- 35: Positionierkragen
- 51: Domabschnitt
- 52: Rahmenabschnitt
- 50', 50", 50‴: Sattelabdeckungsanordnung
- A: Außenfläche/Außenseite
- R, D: Rotationsachse, Drehrichtung
- R1, R2,: Ränder, vorderer, hinterer
- F, E: Fenster, Ecke des Rahmenabschnitts
- E1.1, E1.2, E2, E2.1, E2.2: Sicherheitselemente
- H1, H1.1, H1.2, H2, H2.21 H2.2: Herstellungselemente, Flachabschnitte

- B: Anschlag, Anschlagfläche
- BF: Begrenzungsfläche
- W: Eingewölbter Bereich
- BFO: Begrenzungsfläche außen
- BFI: Begrenzungsfläche innen
- BFS: Gleitbereich

- I: Innenseite, Zuspannseite
- O: Außenseite, Reaktionsseite
- C1, C2: Ausstülpungen
- K: Kontakt
- K1, K2: Kontaktfläche
- FB: Fügebereich
- KR: Rahmenkontur
- KB: Bogenkontur
- FK1, FK2: Kantenabschnitte
- FKF: Fase
- FKR: Radius

- 100: Kraftfahrzeug-Scheibenbremse, kurz: Bremse
- 101: Bremsaktuator
- 103: Sattelgehäuse
- 105: Sattelabdeckung, Vergleichsbeispiel der FIG. 1
- 107.1, 107.2: Bremsbelag zuspannseitig, Bremsbelag reaktionsseitig

## Patentansprüche

1. Sattelabdeckungsanordnung (50',50", 50‴) für eine Bremssattelbaugruppe (1) für eine Nutzfahrzeug-Scheibenbremse (100), wenigstens umfassend eine Sattelabdeckung (5',5", 5‴, 5"") oder wenigstens umfassend die Sattelabdeckung (5',5", 5‴, 5"") und ein oder mehrere Anbauteile wie eine fahrzeugabseitige Stützplatte (9), insbesondere zudem eine diese gegenüberliegende bremsscheibenseitige Gehäusewand (17) und/oder fahrzeugseitige Gehäusewand (7) eines Sattelgehäuses (103),
welche Sattelabdeckung (5',5", 5‴, 5"") ausgebildet ist, ein Sattelgehäuse (103)oberseitig abzudecken, wobei
- eine Bremsscheibe entlang einer Rotationsachse (R) von einer Zuspannseite (I) bis hin zu einer Reaktionsseite (O) mit einer Rahmenkontur (KR) der Sattelabdeckung
(5',5", 5‴, 5"") übergriffen werden kann, und wobei die Sattelabdeckung (5',5", 5‴, 5"") eine der Reaktionsseite (O) zugeordnete fahrzeugabseitige Außenseite (A) aufweist, und
- mit einer in Richtung einer Drehrichtung (D) der Bremsscheibe Bogenkontur (KB) gebildet ist, die sich zwischen in Drehrichtung gegenüberliegenden Rändern (R1, R2) der Sattelabdeckung erstreckt,
**dadurch gekennzeichnet, dass** die Sattelabdeckung (5',5", 5‴, 5ʺʺ) als ein die Rahmenkontur (KR) und die Bogenkontur (KB) eines Rahmenabschnitts (52) ausbildendes einstückiges metallisches Formteil gebildet ist, insbesondere Formblechteil gebildet ist, insbesondere teilweise oder vollständig aus Blech gebildet ist, wobei
- das einstückige Formteil an der Bogenkontur (KB), insbesondere an wenigstens einem der Ränder (R1, R2), eine formabweichende Auskragung (E1) aufweist, und/oder
- die fahrzeugabseitige Stützplatte (9) eine formabweichende Auskragung
aufweist und/oder einen in den Innenraum (24) ragenden erhabenen Teil aufweist.

2. Sattelabdeckungsanordnung nach Anspruch 1, **dadurch gekennzeichnet, dass**
- das einstückige Formteil an der Rahmenkontur (KR), insbesondere an der Außenseite (A), eine formabweichende Ausstülpung (Fig. 7C) aufweist, oder.
- das einstückige Formteil an der Rahmenkontur (KR), insbesondere an der Außenseite (A), eine formabweichende Einwölbung (W, E2) aufweist.

3. Sattelabdeckungsanordnung (50',50", 50‴) nach Anspruch 1 oder 2, die weiter ein Sattelgehäuse (103) aufweist, mit einer bremsscheibenseitigen Gehäusewand (17) und einer fahrzeugseitigen Gehäusewand (7) des Sattelgehäuses (103).

4. Sattelabdeckungsanordnung nach Anspruch 3, **dadurch gekennzeichnet, dass**
- die Sattelabdeckung (5',5", 5‴, 5ʺʺ) ausgebildet ist, einen Hohlraum (23) des Sattelgehäuses (103) zur Aufnahme eines Zuspannmechanismus abzudecken und die Sattelabdeckung ausgebildet ist, einen Innenraum (24) zur Aufnahme eines Bremsträgers (3, 3') zu übergreifen, und.
- die Sattelabdeckung (5',5", 5‴, 5"") als ein einen Domabschnitt (51) und den Rahmenabschnitt (52) mit der Rahmenkontur und der Bogenkontur (KR, KB) ausbildendes einstückiges Formteil gebildet ist, wobei der Domabschnitt (51) nach außen gewölbt ist zur Abdeckung des Hohlraums (23), insbesondere für einen Zuspannmechanismus, und der Rahmenabschnitt (52) ein Fenster (F) zu einem Innenraum (24), insbesondere für Bremsbeläge (107.1, 107.2), berandet.

5. Sattelabdeckungsanordnung nach einem der vorhergehenden Ansprüche, **dadurch gekennzeichnet, dass** die Sattelabdeckungsanordnung die Sattelabdeckung (5',5", 5‴, 5ʺʺ) und die fahrzeugabseitige Stützplatte (9) umfasst, wobei die fahrzeugabseitige Stützplatte (9) selbst, eine formabweichende Einwölbung und/oder die formabweichende Auskragung aufweist.

6. Sattelabdeckungsanordnung (FIG. 4 bis FIG. 7)
nach einem der vorhergehenden Ansprüche, **dadurch gekennzeichnet, dass**
- wenigstens einer der Ränder (R1, R2) der bogenartigen Kontur (KB) oder die bogenartige Kontur selbst an seiner der Zuspannseite zugeordneten Innenseite (I) der Sattelabdeckung die formabweichende Auskragung als wenigstens ein nach untenseitig vorstehendes Fortsatzstück (E1) trägt, das ausgebildet ist, eine Bewegung des Bremssattels, insbesondere Gleitbremssattels, zur Zuspannseite zu begrenzen.

7. Sattelabdeckungsanordnung nach Anspruch 5, **dadurch gekennzeichnet, dass**
- wenigstens die Außenseite (A) der rahmenartigen Kontur (KR) oder die rahmenartige Kontur selbst die formabweichende Einwölbung (W) als wenigstens eine nach innenseitig vorstehende Einprägung oder Eindellung (E2) trägt, die ausgebildet ist, eine Bewegung des Bremssattels, insbesondere Gleitbremssattels, zur Reaktionsseite zu begrenzen.

8. Sattelabdeckungsanordnung nach Anspruch 5 oder 6, **dadurch gekennzeichnet, dass** die formabweichende Einwölbung als einer flächigen Vertiefung oder Versatz in der Außenseite oder Stützplatte gebildet ist.

9. Sattelabdeckungsanordnung nach einem der Ansprüche 5 bis 7, **dadurch gekennzeichnet, dass**
die formabweichende Auskragung als Anformung an wenigstens einem der Ränder oder als integraler Bestandteil wenigstens eines der Ränder gebildet ist.

10. Sattelabdeckungsanordnung (FIG. 8) nach einem der vorhergehenden Ansprüche, **dadurch gekennzeichnet, dass** die Sattelabdeckung 5 im Bereich einer äußeren Umrandung, insbesondere der Ränder (R1, R2) des Domabschnitts (51) und/oder der Rahmenabschnitts (52), die formabweichende Auskragung als einen oder mehrere Flachabschnitte (H1, H2) aufweist, wobei
ein Flachabschnitt sich vorbestimmt berandet von der Form des einstückigen
Formteils der Sattelabdeckung absetzt, derart dass der Flachabschnitt eine Angriffsfläche für eine Klemm- oder Haltewerkzeug bildet.

11. Sattelabdeckungsanordnung nach Anspruch 9, **dadurch gekennzeichnet, dass** der Flachabschnitt einem Halbzeug des Formteils der Sattelabdeckung auf-, an- oder eingeformt ist, insbesondere auf-, an- oder eingeprägt bzw. -gedrückt ist.

12. Sattelabdeckungsanordnung nach Anspruch 10 oder 11, **dadurch gekennzeichnet, dass** der Flachabschnitt als eine zu einer gewölbten Fläche abgeflacht und vorbestimmt berandete Fläche gebildet ist, und
- sich über einen Zargenbereich der äußeren Umrandung hinaus erstreckt, oder
- eine gewölbte Ecke des Zargenbereichs der äußeren Umrandung einflacht.

13. Sattelabdeckungsanordnung (FIG. 9) nach einem der vorhergehenden Ansprüche, **dadurch gekennzeichnet, dass** der Rahmenabschnitt (52), insbesondere zu einem Fenster (F) hin, eine oder mehrere Kantenabschnitte (FK1, FK2) des Rahmenabschnitts (52) aufweist, die, insbesondere wenigstens ein fensterseitiger Unterkantenabschnitt einer Fensterkante des Rahmenabschnitts (52) zum Innenraum (24) hin, in vorbestimmter Weise abgeflacht sind.

14. Sattelabdeckungsanordnung nach Anspruch 13, **dadurch gekennzeichnet, dass**
- eine oder mehrere Kantenabschnitte des Rahmenabschnitts (52) zum Fenster mit einer vorbestimmt ausgebildeten Fase (FKF) abgekantet sind, insbesondere die Fase in einem vorbestimmten Winkel zur Fensterfläche und/oder mit einer vorbestimmten Fasenbreite ausgebildet ist, und/oder
- eine oder mehrere Kantenabschnitte des Rahmenabschnitts (52) zum Fenster mit einem vorbestimmt ausgebildeten Radius (FKR) gerundet abgeflacht sind, insbesondere der Radius einen vorbestimmten Radiuswert hat.

15. Sattelabdeckungsanordnung nach Anspruch 13 oder 14, **dadurch gekennzeichnet, dass** die eine oder mehrere Kantenabschnitte des Rahmenabschnitts 52 zum Fenster eine quer zur Drehrichtung einer Bremsscheibe ausgerichtete Kante des Rahmenabschnitts (52) zum Fenster bilden, insbesondere nicht seitens der Stützplatte und/oder nicht seitens der fahrzeugseitigen Gehäusewand laufende Kante des Rahmenabschnitts (52) zum Fenster bilden.

16. Bremssattelbaugruppe (1), insbesondere Bremssattel, für eine Kraftfahrzeug-Scheibenbremse (100), insbesondere für eine Nutzfahrzeug-Scheibenbremse mit einer um eine Rotationsache (R) herum bewegten Bremsscheibe, insbesondere für eine Gleitsattelbremse, mit einem Bremsträger (3, 3') und mit einer Sattelabdeckungsanordnung (50'; 50", 50"')nach einem der vorhergehenden Ansprüche, mit einem Sattelgehäuse (103) mit einem Hohlraum (23) zur Aufnahme eines Zuspannmechanismus,
insbesondere umfassend die Sattelabdeckung (5'; 5", 5‴) und ein oder mehrere Anbauteile wie eine fahrzeugabseitige Stützplatte (9),
insbesondere zudem umfassend eine dieser gegenüberliegende bremsscheibenseitige Gehäusewand (17) und fahrzeugseitige Gehäusewand (7) des Sattelgehäuses (103), welche Sattelabdeckung (5',5", 5‴, 5"") ausgebildet ist, das das Sattelgehäuse (103) oberseitig abzudecken und die Bremsscheibe von einer Zuspannseite (I) bis hin
zu einer Reaktionsseite (O) übergreift und wobei die Sattelabdeckung (5',5", 5‴, 5"") eine der Reaktionsseite (O) zugeordnete fahrzeugabseitige Außenseite (A) aufweist.

17. Bremssattelbaugruppe (1) nach Anspruch 16, **dadurch gekennzeichnet, dass** der Zuspannmechanismus einen um eine Hebelachse schwenkbare Bremshebel aufweist, wobei das Sattelgehäuse eine fahrzeugseitige Gehäusewand aus einem einteiligen gebogenen Blech aufweist, an deren Innenseite wenigsten ein Stützelement zur Abstützung des Bremshebels vorgesehen ist.

18. Bremssattelbaugruppe (1) nach Anspruch 16 oder 17, **dadurch gekennzeichnet, dass** das Sattelgehäuse außenseitig einen Anschlag, insbesondere eine Ausstülpung (C1, C2), insbesondere ein Horn oder eine Noppe trägt, die mit der formabweichenden Einwölbung (E2) oder der formabweichenden Auskragung (E1) der Sattelabdeckung zur Begrenzung einer Bewegung des Bremssattels, insbesondere Gleitbremssattels, zusammenwirkt.

19. Nutzfahrzeug-Scheibenbremse (100) mit einer Bremssattelbaugruppe (1) nach einem der Ansprüche 16 bis 18.
